(19) Europäisches Patentamt European Patent Office Office européen des brevets

(11) **EP 4 051 508 B1**

(12) **EUROPEAN PATENT SPECIFICATION**

(45) Date of publication and mention of the grant of the patent:
**16.08.2023 Bulletin 2023/33**

(21) Application number: **20801363.1**

(22) Date of filing: **28.10.2020**

(51) International Patent Classification (IPC):
**B42D 25/342** *(2014.01)*     **B42D 25/41** *(2014.01)*

(52) Cooperative Patent Classification (CPC):
**B42D 25/41; B42D 25/342**

(86) International application number:
**PCT/GB2020/052725**

(87) International publication number:
**WO 2021/084247 (06.05.2021 Gazette 2021/18)**

(54) **METHOD OF FORMING A SECURITY DEVICE**

VERFAHREN ZUR HERSTELLUNG EINER SICHERHEITSVORRICHTUNG

PROCÉDÉ DE FORMATION D'UN DISPOSITIF DE SÉCURITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.10.2019   GB 201915677**

(43) Date of publication of application:
**07.09.2022   Bulletin 2022/36**

(73) Proprietor: **De La Rue International Limited Basingstoke, Hampshire RG22 4BS (GB)**

(72) Inventor: **HOLMES, Brian William Bagshot Surrey TW2 5TU (GB)**

(74) Representative: **Gill Jennings & Every LLP The Broadgate Tower 20 Primrose Street London EC2A 2ES (GB)**

(56) References cited:
**WO-A1-2006/102700     WO-A1-2019/077419**

EP 4 051 508 B1

## Description

## FIELD OF THE INVENTION

The present invention relates to a method of forming security devices suitable for use in documents of value such as banknotes, cheques, passports, identity cards, certificates of authenticity, fiscal stamps and other secure documents, in order to confirm their authenticity. The present invention also relates to methods of manufacturing such security devices.

## DESCRIPTION OF THE RELATED ART

To prevent counterfeiting and enable authenticity to be checked, security documents are typically provided with one or more security devices which are difficult or impossible to replicate accurately with commonly available means, particularly photocopiers, scanners or commercial printers.

Articles of value, and particularly documents of value such as banknotes, cheques, passports, identification documents, certificates and licences, are frequently the target of counterfeiters and persons wishing to make fraudulent copies thereof and/or changes to any data contained therein. Typically such objects are provided with a number of visible security devices for checking the authenticity of the object. By "security device" we mean a feature which it is not possible to reproduce accurately by taking a visible light copy, e.g. through the use of standardly available photocopying or scanning equipment. Examples include features based on one or more patterns such as microtext, fine line patterns, latent images, venetian blind devices, lenticular devices, moiré interference devices and moiré magnification devices, each of which generates a secure visual effect. Other known security devices include holograms, watermarks, embossings, perforations and the use of colour-shifting or luminescent/fluorescent inks. Common to all such devices is that the visual effect exhibited by the device is extremely difficult, or impossible, to copy using available reproduction techniques such as photocopying. Security devices exhibiting non-visible effects such as magnetic materials may also be employed.

One class of security devices are those which produce an optically variable effect, meaning that the appearance of the device is different at different angles of view. Such devices are particularly effective since direct copies (e.g. photocopies) will not produce the optically variable effect and hence can be readily distinguished from genuine devices. Optically variable effects can be generated based on various different mechanisms, including holograms and other diffractive devices, moiré interference and other mechanisms relying on parallax such as venetian blind devices, and also devices which make use of sampling elements in the form of focussing elements, such as lenses, including moiré magnifier devices, integral imaging devices and so-called lenticular devices.

Security devices comprising focussing elements typically require the use of at least one transparent material either to act as an optical spacer between the focussing elements and an image, or image array, on which the focussing elements are to focus, or to act as a support for the focussing element so that some other object can be viewed therethrough. As such, security devices comprising focussing elements are particularly well suited to deployment on security documents based on polymer document substrates, such as polycarbonate substrates, in particular polycarbonate datapages, and polymer banknotes. Polymer document substrates can be selected to be transparent and so provide one or both of the above functions if desired. Therefore, the present disclosure relates in part to polymer-based security documents.

However, the security devices can for example be formed using a transparent material which is applied to a security document of any sort, such as a conventional paper-based document, e.g. in the form of a security article such as a thread, strip, patch, foil or inserted which is incorporated into or applied onto the security document.

Moiré magnifier devices (examples of which are described in EP-A-1695121, WO-A-94/27254, WO-A-2011/107782 and WO2011/107783) make use of an array of focussing elements (such as lenses) and a corresponding array of microimages, wherein the pitches of the focussing elements and the array of microimages and/or their relative locations are mismatched with the array of focussing elements such that a magnified version of the microimages is generated due to the moiré effect. Each microimage is often a complete, miniature version of the image which is ultimately observed, and the array of focussing elements acts to select and display a small portion of each underlying microimage, which portions are combined by the human eye such that the whole, magnified image is visualised. This mechanism is sometimes referred to as "synthetic magnification". The magnified array appears to move relative to the device upon tilting and can be configured to appear above or below the surface of the device itself. The degree of magnification depends, inter alia, on the degree of pitch mismatch and/or angular mismatch between the focussing element array and the microimage array.

Integral imaging devices are similar to moiré magnifier devices in that an array of microimages is provided under a corresponding array of lenses, each microimage being a miniature version of the image to be displayed. However here there is no mismatch between the lenses and the microimages. Instead a visual effect is created by arranging for each microimage to be a view of the same object but from a different viewpoint. When the device is tilted, different portions of the images are magnified by the lenses such that the impression of a three-dimensional image is given.

"Hybrid" devices also exist which combine features of moiré magnification devices with those of integral imaging devices. In a "pure" moiré magnification device, the microimages forming the array will generally be identical to one another. Likewise in a "pure" integral imaging device there will be no mismatch between the arrays, as described above. A "hybrid" moiré magnification / integral imaging device utilises an array of microimages which differ slightly from one another, showing different views of an object, as in an integral imaging device. However, as in a moiré magnification device there is a mismatch between the focussing element array and the microimage array, resulting in a synthetically magnified version of the microimage array, due to the moiré effect, the magnified microimages having a three-dimensional appearance. Since the visual effect is a result of the moiré effect, such hybrid devices are considered a subset of moiré magnification devices for the purposes of the present disclosure. In general, therefore, the microimages provided in a moiré magnification device should be substantially identical in the sense that they are either exactly the same as one another (pure moiré magnifiers) or show the same object/scene but from different viewpoints (hybrid devices).

Moiré magnifiers, integral imaging devices and hybrid devices can all be configured to operate in just one dimension (e.g. utilising cylindrical lenses) or in two dimensions (e.g. comprising a 2D array of spherical or aspherical lenses).

Lenticular devices on the other hand do not rely upon magnification, synthetic or otherwise. An array of sampling or focussing elements, typically cylindrical lenses, overlies a corresponding array of image sections, or "slices", each of which depicts only a portion of an image which is to be displayed and each of which typically has a width on the micrometre scale. Image slices from two or more different images are interleaved and, when viewed through the sampling or focussing elements, at each viewing angle, only selected image slices will be directed towards the viewer. In this way, different composite images can be viewed at different angles. Some examples of lenticular devices are described in US-A-4892336, WO-A-2011/051669, WO-A-2011051670, WO-A-2012/027779 and US-B-6856462. More recently, two-dimensional lenticular devices have also been developed and examples of these are disclosed in WO-A-2015/011493 and WO-A-2015/011494. Lenticular devices have the advantage that different images can be displayed at different viewing angles, giving rise to the possibility of animation and other striking visual effects which are not possible using the moiré magnifier or integral imaging techniques. However, the number of different images achievable is limited by a requirement for the devices to be relatively thin in combination with a lower limit on achievable printing resolution for the images strips. In particular, each image slice width will be determined by the lens diameter divided by an integer value determined by the number of image "channels", i.e. the number of different images desired to be displayed. Since the lens diameter cannot exceed the focal length divided by (n-1), where n is approximately 1.5, the lens diameter is approximately twice the focal length, which also approximates to twice the substrate or carrier thickness. For commercial lenticulars the thickness can be several hundred microns and thus the printed image strips can be typically 50 $\mu$m or more. In security devices the substrate thickness can be less than 100 $\mu$m and in the case of threads 35 $\mu$m or less, resulting in strips widths less than 50 $\mu$m, which are at or below the resolution of conventional printing capability. This significantly reduces the number of image frames achievable. Therefore if we are to increase the number of image frames it is desirable to have the capability to form image strips of 10 $\mu$m or less.

Security devices such as moiré magnifiers, integral imaging devices and lenticular devices, as well as others such as venetian blind type devices (which utilise a masking grid in place of focussing elements) and moiré interference devices depend for their success significantly on the resolution with which the image array (defining for example microimages, interleaved image sections or line patterns) can be formed. In moiré magnifiers and the like, since the security device must be thin in order to be incorporated into a document such as a banknote, any focussing elements required must also be thin, which by their nature also limits their lateral dimensions. For example, lenses used in such security elements preferably have a width or diameter of 50 micrometres or less, e.g. 30 micrometres. In a lenticular device this leads to the requirement that each image element must have a width which is at most half the lens width. For example, in a "two channel" lenticular switch device which displays only two images (one across a first range of viewing angles and the other across the remaining viewing angles), where the lenses are of 30 micrometre width, each image section must have a width of 15 micrometres or less. More complicated lenticular effects such as animation, motion or 3D effects usually require more than two interlaced images and hence each section needs to be even finer in order to fit all of the image sections into the optical footprint of each lens. For instance, in a "six channel" device with six interlaced images, where the lenses are of 30 micrometre width, each image section must have a width of 5 micrometres or less.

Similarly high-resolution image elements are also required in moiré magnifiers and integral imaging devices since approximately one microimage must be provided for each focussing element and again this means in effect that each microimage must be formed within a small area of e.g. 30 by 30 micrometres. In order for the microimage to carry any detail, fine linewidths of 5 micrometres or less are therefore highly desirable.

The same is true for many security devices which do not make use of focussing elements, e.g. venetian blind devices and moiré interference devices which rely on the parallax effect caused when two sets of elements on different planes are viewed in combination from different angles. In order to perceive a change in visual appearance upon tilting over acceptable angles, the aspect ratio of the spacing between the planes (which is limited by the thickness of the device) to the spacing between image elements must be high. This in practice requires the image elements to be formed at high resolution to avoid the need for an overly thick device.

Typical processes used to manufacture image patterns for security devices are based on printing, and include intaglio, gravure, wet lithographic printing as well as dry lithographic printing. The achievable resolution is limited by several factors, including the viscosity, wettability and chemistry of the ink, as well as the surface energy, unevenness and wicking ability of the substrate, all of which lead to ink spreading. With careful design and implementation, such techniques can be used to print pattern elements with a line width of between 25 $\mu$m and 50 $\mu$m. For example, with gravure or wet lithographic printing it is possible to achieve line widths down to about 15 $\mu$m.

Methods such as these are limited to the formation of single-colour image elements, since it is not possible to achieve the high registration required between different workings of a multi-coloured print. In the case of a lenticular device for example, the various interlaced image sections must all be defined on a single print master (e.g. a gravure or lithographic cylinder) and transferred to the substrate in a single working, hence in a single colour. The various images displayed by the resulting security device will therefore be monotone, or at most duotone if the so-formed image elements are placed against a background of a different colour. Conventional printing techniques are unsuitable for producing lenticular security devices involving more than one printed colour component, owing to the abovementioned unfeasibility of registering different printed image components with one another.

One class of structure that has been identified as offering an alternative to print is plasmonic nanostructures. Plasmonic nanostructures are structures that generate colour from the resonant interactions between light and metallic nanostructures where collective free-electron oscillations within the metallic nanostructure couple to electromagnetic fields in a neighbouring dielectric material. These structures are described in detail in: "Plasmonic Color Palettes for Photorealistic Printing with Aluminum Nanostructures", Shawn J. Tan et al., Nano Letters, 2014, 14 (7), pp 4023-4029, DOI: 10.1021/nl501460x; "Color generation via subwavelength plasmonic nanostructures", Yinghong Gu et al., Nanoscale, 2015, 7, pp 6409-6419, DOI: 10.1039/C5NR00578G; and "Plasmonic colour generation", Anders Kristensen et al., Nat. Rev. Mater. 2, 16088, (2016), pp 1-14, DOI: 10.1038/natrevmats.2016.88.

In contrast with other colour-generating structures, such as diffraction gratings, plasmonic nanostructures are an example of a structure that is capable of generating colour that does not exhibit angular dispersion, where light rays corresponding to the first order diffractive orders are redirected or diffracted by angles (beta) relative to the substrate normal according to the diffraction equation:

$$\frac{\lambda}{d} = \sin\alpha \pm \sin\beta$$

where A is wavelength of incident light, $d$ is the width of a slit, $a$ is the angle of incidence and $\beta$ is the angle of first order diffraction. Rather, the surface plasmon polariton resonance effects act to subtract certain parts of the incident light spectrum from the specular reflected light such that a net colour is imparted.

For example if the plasmonic resonances act to suppress the reflection of light in the green part of the spectrum (circa 520-550 nm) then the net reflected light will have a magenta hue or colour. Whereas if the blue part of the incident spectrum is suppressed by plasmon coupling in reflection then the net reflected light will have a yellow hue. This subtractive colour effect will not be substantially modified by the angle of incidence and reflection and therefore plasmonic nanostructures can be substantially optically invariable, meaning that white light at substantially any angle of incidence will generate substantially the same colour for a particular viewing angle. These structures produce colours based on the characteristics of the structure, e.g. the size, shape and spacing of the elements of the nanostructure array, meaning multiple in-register colours can be produced by a single plasmonic nanostructure array.

While these structures have been identified as an alternative to print, problems exist that make their introduction into commercially produced security devices difficult. In particular, plasmonic nanostructures are typically sub-wavelength, by which it is meant that they have dimensions less than the wavelength of visible light, e.g. 500 nm or less. While these dimensions mean that, theoretically, the structures will lend themselves well to the high resolution imagery often needed in security devices, forming the structures to define the desired imagery is a time-consuming and expensive process. For example, the structures may be formed by a cast in accordance with the desired imagery, but to do this a specialised cast must be produced in which the nanostructures are individually positioned in accordance the desired image. If any changes are needed to the imagery, for example, for use on a banknote of a different denomination, an entirely new cast must be produced.

There is therefore a need to provide a time-effective and cost-effective way of using plasmonic nanostructures in the formation of optically variable security devices.

An example of a technique for forming a security device with plasmonic nanostructures is found in WO 2019/077419 A1, which discloses a:

method of forming a security device, the method comprising: providing a substrate comprising an array of plasmonic nanostructures;

providing a first array of sampling elements over the substrate; and wherein regions of said plasmonic nanostructures define an array of image elements configured for viewing through an array of sampling elements such that an optically variable effect is exhibited by the array of sampling elements and the array of image elements in combination in dependence upon the viewing angle.

## SUMMARY OF THE INVENTION

In accordance with a first aspect of the present invention there is provided a method of forming a security device, the method comprising: providing a substrate comprising an array of plasmonic nanostructures; providing a first array of sampling elements over the substrate; and irradiating one or more regions of the array of plasmonic nanostructures through the first array of sampling elements with electromagnetic radiation so as to modify the geometry of the plasmonic nanostructures in the one or more regions and thereby modify the optical response of the array of plasmonic nanostructures in the one or more regions; wherein said one or more regions define an array of image elements configured for viewing through an array of sampling elements such that an optically variable effect is exhibited by the array of sampling elements and the array of image elements in combination in dependence upon the viewing angle.

As has been described in WO-A-2016198657, it is known that plasmonic nanostructures can be modified by irradiating with electromagnetic radiation to alter their optical response. However, the present inventor has realised that this process can be adapted to form security devices in the manner described above, which involves producing an array of image elements by performing the irradiation through an array of sampling elements. As will be explained below, this allows one to efficiently manufacture a wide range of security devices that are adapted for viewing using an array of sampling elements, i.e. since sampling elements are used to modify the plasmonic nanostructure array. Furthermore, this also provides that a single arrangement of plasmonic nanostructures may be produced by conventional casting techniques for all security devices, which arrangement may then be modified, as desired, for a particular security device by varying the nature of the irradiation process. This, therefore, makes it much more cost-effective and time-effective to produce security devices of different appearance.

As noted above, the method involves providing a substrate comprising an array of plasmonic nanostructures. Typically, the substrate will comprise a layer into which the plasmonic nanostructures are formed, as well as a support layer. For example, the substrate may be a security document substrate and may comprise a support layer acting as the body of the security document, e.g.

biaxially oriented polypropylene (BOPP), with one or more opacifying layers on each side, and a region (e.g. a window or half-window region) having the layers carrying the array of plasmonic nanostructures. The substrate may be a sheet of substrate, e.g. a sheet containing multiple security documents or security devices, or may be part of a substantially continuous substrate web, e.g. a web of security documents or devices.

The method then involves providing a first array of sampling elements over the substrate, i.e. so that they overlap the plasmonic nanostructures of the substrate. This may involve providing the array of sampling elements formed in or on a transparent layer that is applied over and which conforms to the array of plasmonic nanostructures. However, in some embodiments, it may be preferred that the plasmonic nanostructures are not encapsulated in an overlayer prior to irradiating, in which case, the sampling elements may be held over the plasmonic nanostructures during irradiation before optionally being affixed over the plasmonic nanostructures, e.g. using a conformal transparent layer. In many embodiments, the first array of sampling elements will act as the sampling elements of the security device, i.e. they will be permanently affixed on or over the substrate, typically before the irradiation step is performed. However, it is not essential that the same sampling elements used when irradiating the security device are used to form the optically variable effect. As will be described in more detail below, in some embodiments, one sampling element array may be used during the irradiating step before another array of sampling elements is provided, e.g. affixed on or over the substrate, for viewing the optically variable effect.

The plasmonic nanostructures are then irradiated through the first array of sampling elements with electromagnetic radiation in order to modify the optical response of the plasmonic nanostructure. The basic principles by which irradiation can modify plasmonic nanostructures is disclosed in WO-A-2016198657. In essence, irradiation of the plasmonic nanostructures induces localised surface plasmon resonances. These resonances cause the nanostructures to absorb a portion of the incident radiation. This absorption of energy from incident radiation is used to modify the geometry of the array of plasmonic nanostructures, e.g. the shape, size or spacing of the elements, to locally alter optical response of the array. Typically, the irradiation causes, at least partially, photothermal melting of the plasmonic nanostructures in the one or more regions so as to modify the geometry of the plasmonic nanostructures. So, for example, the shape or size of one or more plasmonic nanostructures may be altered by deforming existing plasmonic nanostructures of the array. Alternatively, the spacing (i.e. of functioning plasmonic nanostructures) may be modified by selectively deforming structures so as to inhibit the plasmonic effect of certain ones of the structures.

This modification of the plasmonic nanostructures changes the optical response of the array within the effected regions. For example, it may modify the localised surface plasmon resonances of one or more of the plasmonic nanostructures, causing a different wavelength of incident light to be absorbed by those structures, and hence changing the makeup of the light reflected from those regions.

Just as conventional security devices rely on one or more regions of, for example, ink to define image elements that cooperate with a sampling element array to generate an optically variable effect, the present method produces regions with differing optical responses that define analogous image elements. An optically variable effect may thereby be exhibited as these image elements with differing optical responses are sampled by an array of sampling elements. Specific examples of security effects producible in this way will be described further below.

It will be noted that the present invention requires irradiating one or more regions. Typically, each sampling element will have one or several regions associated therewith that are irradiated. However, in some embodiments, one continuous region may be irradiated through the sampling elements. For example, a substantially continuous irradiated region negatively defining a symbol under each lens may be chosen. Alternatively, substantially all of the array of plasmonic nanostructures may be irradiated, with different sub-regions irradiated by different amounts to produce different modified optical responses. In all cases, though, the one or more irradiated regions will define an array of image elements configured for viewing through an array of sampling elements to generate an optically variable effect.

While the above has referred generally to the "optical response" of the array of plasmonic nanostructures, it should be appreciated that, typically, the aim will be to modify the geometry of the plasmonic nanostructures such that the plasmonic nanostructures in the one or more regions exhibit one or more visible colours in reflected light. For example, the geometry of the plasmonic nanostructures may be modified such that localised surface plasmon resonances act to suppress the reflection of light within the visible part of the spectrum (e.g. from about 380 to 740 nanometers) such that white light incident on the array of plasmonic nanostructures takes on a coloured appearance. However, other optical responses could be pursued, such as an effect on ultraviolet radiation, rather than visible light.

Just as it is preferred that the optical response of the modified regions involves a visible colour in reflection, in many cases, the provided array of plasmonic nanostructures (i.e. before modification by irradiation) will exhibit one or more visible colours in reflected light. Hence, any unmodified areas of the array may maintain this initial visible response in the final security device. For example, the provided array of plasmonic nanostructures may exhibit a substantially uniform colour in reflected light across the array, preferably a substantially uniform blue or white colour. In these cases, i.e. where the provided array of plasmonic nanostructures exhibits one or more visible colours in reflected light, modifying the geometry of the plasmonic nanostructures in the one or more regions will typically involve modifying the colour exhibited by the plasmonic nanostructures in reflected light, such that the plasmonic nanostructures in the one or more regions exhibit one or more visible colours different from the one or more visible colours exhibited by the provided array of plasmonic nanostructures. That is, the geometry of the plasmonic nanostructures will be changed so as to change the localised surface plasmon resonances and hence change the exhibited colour. For example, where a uniformly blue array is provided, this may be provided by an array of nanostructures that supress reflection of light towards the red end of the spectrum, and irradiation may be performed so as to modify the geometry of the plasmonic nanostructures and push the plasmonic resonances towards the blue end of spectrum such that reflected light takes on a redder appearance. It should be noted that the array of plasmonic nanostructures may or may not exhibit a uniform colour in reflected light. In some cases, the unmodified array may define a pattern using areas of different colours. Where it is desired that a uniform colour is exhibited, this may or may not require an array of identical plasmonic nanostructures. As noted in the above-cited "Plasmonic Color Palettes for Photorealistic Printing with Aluminum Nanostructures", Shawn J. Tan et al., Nano Letters, 2014, 14 (7), pp 4023-4029, DOI: 10.1021/nl501460x, some colours are achieved by mixing structures of different shape, size and/or spacing. Blue and white are identified above as preferred uniform colours. Blue is preferred since the modifications tend to push plasmon interactions towards shorter wavelengths and so a blue array can be easily modified to produce red images, for example. White, on the other hand, may simply involve a substantially even suppression of wavelengths across the visible spectrum and provides a neutral background against which the image elements may be defined.

As noted above, the plasmonic nanostructures of the provided array of plasmonic nanostructures may vary in one or more of their shape, size and spacing across the array before irradiating with electromagnetic radiation. This may be done to provide a patterned appearance to the array prior to modification, or simply to mix colours to provide a wider colour palette for the array of plasmonic nanostructures. Indeed, preferably, the plasmonic nanostructures of the provided array of plasmonic nanostructures vary in their spacing and vary in their shape and/or size across the array before irradiating with electromagnetic radiation. A mixture of both spacing variations and size or shape variations has been shown to achieve an expanded colour palette, which enables more different colours to be exhibited in the final security device. The more colours that are provided, the greater security will be, since a larger number of colours will be hard to replicate with, for example, printing techniques.

As noted above, the method involves irradiating the plasmonic nanostructures so as to modify their optical response. In many embodiments, the method involves irradiating the one or more regions with electromagnetic radiation from a laser. That is, a laser is provided as the source of the electromagnetic radiation. The laser itself may be moved or controlled as part of the irradiation process, and/or the electromagnetic radiation may be manipulated (e.g. by mirrors, beam expanders, LCOS displays) during irradiation.

As noted above, the method is aiming to provide one or more regions with a modified optical response that define an array of image elements. One way in which the method may controllably irradiate the one or more regions is by scanning the electromagnetic radiation across the one or more regions. For example, to produce a one-dimensional lenticular device, described above, a laser beam may be scanned along the length of one or more focussing elements, turning on and off for different areas in order to define the one or more regions in which the plasmonic nanostructures are modified, while keeping the irradiation direction constant., e.g. normal to the plane of the security device This scanning process may build up, under each focussing element, regions with different optical responses, i.e. the image elements, these regions then being visible to a viewer in combination when the device is viewed along the direction corresponding to the direction of irradiation, i.e. when viewed perpendicular to the security device. This method effectively builds up one image of a lenticular device in a line-by-line process. Additional images could then be built up for different viewing angles by repeating the process but with a different irradiation direction.

In particularly preferable embodiments, irradiating one or more regions of the array of plasmonic nanostructures with electromagnetic radiation comprises projecting an image through the first array of sampling elements so as to irradiate the one or more regions in accordance with the projected image. This provides one way in which an image can be recorded into the security device in a single, substantially simultaneous exposure of electromagnetic radiation. Particularly preferably, sampling elements in the form of focussing elements are used, in which case, each focussing element will form a respective microimage version of the projected image. This may be used to produce an integral imaging device, described above, in which tilting of the security device gives the impression of rotation of the displayed image. Alternatively, as will be described below, the focussing element array may then be replaced with one having a different orientation and/or pitch such that a moiré interaction between the focussing elements and microimages produces a moiré magnification device, also described above. While focussing elements are preferred, it is nonetheless possible to project the image through non-focussing sampling elements, e.g. to produce an image that is visible at one viewing position. In all of the above examples, an image may be projected using a patterned mask to pattern radiation from a radiation source. Alternatively, an LCOS (liquid crystal on silicon) display or SLM (spatial light modulator) may be used to pattern radiation in accordance with an image.

As noted above, one particular type of optical effect may be produced by configuring the array of image elements such that at a first viewing angle the array of image elements is displayed and such that at a second viewing angle, different from the first viewing angle, the array of image elements is concealed. This may correspond to a so-called "lenticular device", as described above. For example, the one or more regions may be recorded through the sampling elements along a first direction such that the image elements defined by the one or more regions are visible when the final security device is viewed substantially along the first direction. When the device is rotated away from this viewing position, the sampling elements will sample parts of the plasmonic nanostructure array that were not modified by irradiation along the first direction, and so the image elements may be concealed. For example, the array of sampling elements may comprise an array of elongate sampling elements, the elongate sampling elements having a one-dimensional periodicity, and the array of image elements may correspondingly comprises an array of image strips (or image "slices"), wherein one or more sets of the image strips are selectively displayed by the array of sampling elements in dependence upon the viewing angle.

The above has referred generally to modifying one or more regions to produce an array of image elements, but it should be appreciated that these one or more regions may be used to define multiple sets of image elements that produce different aspects of an optically variable effect. For example, the one or more regions may comprise one or more first regions and one or more second regions different from the one or more first regions, wherein the one or more first regions define a first subset of the array of image elements and wherein the one or more second regions define a second subset of the array of image elements, wherein the first and second subsets of the array of image elements are configured such that at a first viewing angle the first subset of the array of image elements is displayed by the array of sampling elements and such that at a second viewing angle, different from the first viewing angle, the second subset of the array of image elements is displayed by the array of sampling elements. Like the above example, the first regions may be irradiated through the sampling elements along a first direction such that the first subset of image elements are visible along this first direction and the second regions may then be irradiated through the sampling elements along a second direction, different from the first direction, such that the second subset of image elements are visible along this second direction. The first subset of image elements may, collectively, define a first image, and the second subset of image elements may, collectively, define a second image different from the first image. That is, each image element may define a portion of the corresponding image, e.g. an image slice or pixel, which when viewed in combination through the sampling elements gives the impression of a whole image. This may produce a lenticular-type device, i.e. one that exhibits an image switch when changing between the first and second viewing angles and as the different image portions are visible in combination sequentially.

Other embodiments may provide that irradiating one or more regions of the array of plasmonic nanostructures comprises irradiating one or more first regions of the array of plasmonic nanostructures through the first array of sampling elements with electromagnetic radiation in accordance with a first set of irradiation parameters so as to modify the geometry of the plasmonic nanostructures in the one or more first regions and thereby modify the optical response of the array of plasmonic nanostructures in the one or more first regions, and irradiating one or more second regions of the array of plasmonic nanostructures through the first array of sampling elements with electromagnetic radiation in accordance with a second set of irradiation parameters different from the first set of irradiation parameters so as to modify the geometry of the plasmonic nanostructures in the one or more second regions and thereby modify the optical response of the array of plasmonic nanostructures in the one or more second regions, such that the modified optical response of the one or more second regions is different from the modified optical response of the one or more first regions. In this example, different regions are irradiated differently to produce a different optical response. This may be used to define, for example, different colours within the same optical effect. For example, an array of microimages may be formed with different coloured regions within each microimage, i.e. individually multi-coloured microimages. Alternatively, this may be used to define different image elements with, for example, different colours. For example, two different arrays of microimages may be formed in different colours, or different image portions (e.g. image slices or pixels) may be defined in different colours to give a lenticular-type image switching effect in which the different images appear in different colours.

The irradiation parameters, mentioned above, include a wavelength of the electromagnetic radiation, an irradiation duration, a scanning speed of the electromagnetic radiation, and/or an intensity of the electromagnetic radiation. One or more of these may be varied for the different first and second regions to modify the plasmonic nanostructures differently and hence achieve the different optical responses. It will be appreciated that these irradiation parameters may also be set as desired when it is not necessarily desired to modify different regions differently. For example, it may be desired to record an image in red for one particular security device, in which case, the irradiation parameters may be set appropriately. A different security device may then be irradiated with different irradiation parameters if a different colour of optical effect is desired.

The wavelength of the electromagnetic radiation may be varied by adjusting the radiation source, e.g. adjusting or changing the laser used to generate the electromagnetic radiation. The duration may be altered, for example, by changing the amount of time that an image is projected through the sampling elements. Different regions may be irradiated for different durations by changing the image as it is projected through the sampling elements. For example, if the image projected is "£5", and it is desired that the "£" and the "5" be in different colours, both symbols may initially be projected through the sampling elements, e.g. by an appropriate image on an LCOS or SLM, before the "5" is removed from the image, leaving only the "£" so that the regions corresponding to this symbol are irradiated for a longer duration. In embodiments in which the electromagnetic radiation is scanned across the regions, the scanning speed is simply configured by changing the rate at which the electromagnetic radiation passes across the surface of the security device. Some regions may be scanned with a slower speed to achieve different optical responses than other regions scanned at a higher speed. Finally, the intensity of the radiation may be adjusted by changing the light source, or by changing one or more filters or the image projecting means, such as the LCOS or SLM.

As indicated above, the step of irradiating one or more first regions of the array of plasmonic nanostructures is preferably configured to modify the geometry of the plasmonic nanostructures such that the plasmonic nanostructures in the one or first more regions exhibit a first visible colour in reflected light, and the step of irradiating one or more second regions of the array of plasmonic nanostructures is configured to modify the geometry of the plasmonic nanostructures such that the plasmonic nanostructures in the one or second more regions exhibit a second visible colour in reflected light, different from the first visible colour. Producing regions of different colour in this way enables very high or even integral registration between the different colours, which is very difficult to convincingly replicate with other means, such as print. While it is, of course, preferred that different regions are produced with different colours, it is also possible that one or more sets of regions may produce an optical response outside of the visible spectrum, such as in infrared or UV light.

Registration between regions with different optical responses can be maximised by irradiating the one or more first regions with electromagnetic radiation substantially simultaneously with irradiating the one or more second regions with electromagnetic radiation. This may involve projecting an image through the sampling elements, with different areas of the image having different irradiation parameters to achieve the different optical responses, for example.

As outlined above, one type of optical effect that is preferred is one in which said one or more regions define an array of microimages, and the optically variable effect exhibited by the array of sampling elements and the array of image elements in combination in dependence upon the viewing angle comprises a synthetically magnified version of the array of microimages. As mentioned above, an array of microimage may be produced by projecting an image though an array of focussing elements; however, any technique of defining the array of microimages may be used to produce this effect. It should be noted that an array of microimages may comprise a two-dimensional array of microimages sampled by a two-dimensional array of sampling elements, with synthetic magnification enlarging the displayed version of the microimages in two orthogonal directions. Alternatively, the array of microimages may comprise a one-dimensional array of microimages, i.e. microimages that are elongate along one direction, which may be sampled by a one-dimensional array of sampling elements such that synthetic magnification enlarges the displayed version of the microimages along only one direction, i.e. the repeat direction of the sampling element array. As indicated above, preferably one or more microimages of the array of microimages comprise a first portion, defined by the one or more first regions, and a second portion, defined by the one or more second regions, such that the first and second portions of the or each microimage exhibit the different optical responses. For example, the microimages may have portions of different colours, such as the "£5" example given above, in which the different symbols have different colours. Of course, move complex multi-coloured microimages may also be produced, such as images of flags or even portraits.

In most embodiments, the array of plasmonic nanostructures comprises a two dimensional array of metal nanoplates disposed on a dielectric layer. In these examples, modifying the geometry of the plasmonic nanostructures typically involves modifying the metal nanoplates that give rise to the local surface plasmon resonances. A further continuous metal layer may be provided beneath the dielectric layer. The dielectric layer may also be continuous and may be unstructured. In such an example, the array of nanoplates may be provided by a masked deposition process, or a patterned demetalisation process. In other embodiments, the dielectric layer is structured, for example, the array of plasmonic nanostructures may comprise a two-dimensional array of nanopillars, each nanopillar comprising a body formed of the dielectric material and each nanopillar being topped by a metal nanoplate. Such pillars may be circular in horizontal cross-section, or may have other shapes such as square or oval. As has been mentioned, the shape may be configured to affect the colour generated by the array of plasmonic nanostructures. These nanopillars may have a diameter (largest width) in the range 10 to 500 nm. A structured dielectric layer may be formed using a cast cure process. A functioning array of plasmonic nanostructures may then simply be completed by performing a directional deposition process on the structured dielectric layer, thereby providing the metal nanoplate on the top of the nanopillar and the metal layer surrounding the bases of the nanopillars. In other examples, the array of plasmonic nanostructures may comprise a two-dimensional array of nanoholes through a metal layer disposed on a dielectric layer. Typically the nanohole will extend into the dielectric layer such that the structure may be defined by the form of the dielectric layer. For example, the hole may be formed in a UV curable material as typically used for cast cure replication of surface relief microstructures. Typical substrate materials include acrylated oligomers such as acrylic esters of polyesters, polyethers, polyurethanes and epoxy resins. Alternatively, the hole may be formed in suitable thermoplastic materials often based on acrylic (PMMA) or urethane chemistries. The nanohole may further comprise a metal layer at the base of the nanohole. Again, this structure may be formed in the dielectric material and a functioning array of plasmonic nanostructures may then be completed by performing a directional deposition process on the structured dielectric layer, thereby providing the metal on the surface between the nanoholes and at the base of the nanoholes.

As noted above, in many embodiments, providing the first array of sampling elements over the substrate comprises affixing the first array of sampling elements over the substrate such that the first array of sampling elements act as said array of sampling elements (i.e. the one through which the image elements are configured for viewing) and the optically variable effect is exhibited by the first array of sampling elements and the array of image elements in combination in dependence upon the viewing angle. In other words, the sampling elements through which the irradiating step is performed are the same sampling elements then used to view the optically variable effect of the final security device. This is advantageous as it ensures the optical replay of the device exactly matches what was recorded in the irradiating step. Furthermore, this allows the irradiating step to be one of the last steps in the manufacture of the security device and/or security document. For example, the device may be formed directly on a banknote and said banknote may have the substrate and sampling elements provided and be fully printed before the irradiating step is performed to complete the security device.

Alternatively, the method may further comprise separating the first array of sampling elements from the substrate and affixing a second array of sampling elements over the substrate such that the second array of sampling elements act as said array of sampling elements (i.e. the one through which the image elements are configured for viewing) and the optically variable effect is exhibited by the second array of sampling elements and the array of image elements in combination in dependence upon the viewing angle. The first array of sampling elements may be simply placed on or over the plasmonic nanostructures during the irradiation step. For example, the array of sampling elements may be part of the apparatus used to perform the irradiating step. In such an example, the security device may simply be held beneath the first array of sampling elements during the irradiating step, before a second security device is brought into position beneath the same sampling elements for the production of a second security device. Alternatively, a temporary array of sampling elements could be provided over the plasmonic nanostructures, which temporary array of sampling elements may then be separated from the security device so that a second array of sampling elements may be affixed.

One possible advantage to irradiating the one or more regions through a different array of sampling elements than is used to replay the effect is that the pitch and/or orientation of the first array of sampling elements may be made to differ from that of the second array of sampling elements such that the optically variable effect exhibited by the second array of sampling elements and the array of image elements in combination is at least in part due to the moiré effect. For example, an array of microimages may be defined by the irradiated regions by projecting an image through the first array of sampling elements. This array of microimages will have a pitch and orientation substantially matched to that of the first array of sampling elements. By then viewing the array of microimages through a second array of sampling elements having a different pitch or orientation, a moiré magnified version of the array of microimages will be produced. It will be appreciated that, typically, the first array of sampling elements will be physically different to the second array of sampling elements, but it would also be possible to reposition, i.e. change the orientation of, the same sampling elements used during the irradiation step in order to achieve this moiré interaction.

In some embodiments, irradiating one or more regions of the array of plasmonic nanostructures through the first array of sampling elements comprises irradiating the sampling elements with diffuse electromagnetic radiation. By passing diffuse radiation through the sampling elements, it is possible to form entire microimages corresponding to multiple viewing angles in the final device underneath each sampling element in one irradiation step. For example, projecting an image in diffuse light through an array of sampling elements, preferably focussing elements, may produce a microimage version of the projected image underneath each sampling element. This may be achieved by patterning collimated electromagnetic radiation and passing the patterned collimated electromagnetic radiation through a diffuser and/or by projecting an image formed in substantially collimated electromagnetic radiation through a diffuser.

In alternative embodiments, irradiating the one or more regions of the array of plasmonic nanostructures through the first array of sampling elements comprises irradiating the sampling elements with substantially collimated electromagnetic radiation. The use of collimated light may be particularly useful for forming one or more regions defining image elements corresponding to substantially one viewing angle. That is, the pattern or image projected in collimated light through the sampling elements may be reconstructed when the security device is viewed at an angle that corresponds to the direction of the irradiation. This allows for configuring the appearance of the device at discrete viewing angles and may be used to produce a security element exhibiting an image switch effect, such as a lenticular security device, as discussed above. Particularly preferably, an image is projected through the focussing elements, and the projected image is formed in substantially collimated electromagnetic radiation, e.g. by irradiating an LCOS with collimated light. In one particularly preferred example of this, the one or more regions comprise one or more first regions and one or more second regions different from the one or more first regions, and wherein irradiating the one or more regions of the array of plasmonic nanostructures through the first array of sampling elements comprises irradiating the one or more first regions through sampling elements by irradiating the sampling elements with substantially collimated electromagnetic radiation, moving the substrate relative to the first array of sampling elements, and then irradiating the one or more second regions through sampling elements by irradiating the sampling elements with substantially collimated electromagnetic radiation. This is a particularly preferred way of producing first and second regions corresponding to first and second image elements for viewing at first and second viewing angles. In this example, the array of plasmonic nanostructures is irradiated with collimated light at a particular angle to define the first regions and then the substrate is stepped relative to the sampling elements so that the second regions may then be irradiated along the same irradiation direction and the movement relative to the sampling elements ensures that different parts of the plasmonic nanostructure array are irradiated in the second step. An alternative to this would be to keep the sampling elements and substrate fixed relative to one another and to perform the irradiation along different irradiation angles to irradiate different parts of the plasmonic nanostructure array through the sampling elements.

In some examples, irradiating the one or more first regions comprises projecting a first image formed in substantially collimated electromagnetic radiation through the first array of sampling elements and wherein irradiating the one or more second regions comprises projecting a second image formed in substantially collimated electromagnetic radiation through the first array of sampling elements. Preferably, the first image is different from the second image. Alternatively, the first image may be the same as the second image, and the irradiation parameters may be varied between projecting the first image and projecting the second image, i.e. such that the optical response of the modified plasmonic nanostructures differs between the first and second regions. This is a particularly preferred way of producing a security device that exhibits an image switch effect, either switching between different images as the viewing angle is varied such that different ones of the first and second regions are displayed through the sampling elements, or switching between the same image in different colours.

The method may be implemented using sampling elements of a variety of different types. However, as mentioned above, preferably the first and/or second array of sampling elements comprises an array of focussing elements. In which case, the focussing elements will typically be arranged such that the array of plasmonic nanostructures are located substantially in the focal plane of the focussing elements. The nature of the array of sampling elements will depend on the type of security device being formed, and may, as an alternative or an addition to the focussing element array, comprise a masking grid or a second image pattern, for instance. Focussing elements provide the additional benefit that they increase the intensity of the electromagnetic radiation where it impinges upon the plasmonic nanostructure array in or near the focal plane. This means that the initial power density of the impinging radiation may be below the threshold for modifying the plasmonic nanostructures, but is focussed by the focussing elements to bring the energy density above the threshold. As a result, for a given power of electromagnetic radiation source, a larger area can be modified and patterned when an array of focussing elements are used to focus the incident light.

One application of the present method is the production of a one-dimensional lenticular device, or a lenticular device that exhibits a lenticular image switch in one direction only. The focussing element array therefore typically comprises focussing elements adapted to focus light in one dimension, preferably cylindrical focussing elements. Alternatively, the array of focussing elements may comprise focussing elements adapted to focus light in at least two orthogonal directions, these preferably being spherical, hemispherical, or aspherical focussing elements. Such focussing elements may be used to produce two-dimensional lenticular devices, or more preferably, moire magnification devices or integral imaging devices, all of which are described above.

In many preferred embodiments, the array of focussing elements comprises an array of lenses. In preferred examples, the focussing element array may have a one- or two-dimensional periodicity in the range 5-200 micrometres, preferably 10-100 micrometres, and most preferably 20-80 micrometres. The focussing elements may have been formed, for example, by a process of thermal embossing or cast-cure replication.

The array of sampling elements preferably has a periodicity in that it has a repeating, periodic structure of equally spaced, equally sized, identically oriented sampling elements. While a regular array of sampling elements is preferred, alternatively, an irregular array of sampling elements may be used, in which the spacing, size and/or orientation of the sampling elements changes across the array.

In accordance with a second aspect of the invention there is provided a method according to claim 14.

This aspect of the invention relies on the above noted advantage that the same array of plasmonic nanostructures may be modified differently to produce different effects. So, whereas conventionally, entirely different cast-cure processes are needed to produce security devices with colour-generating relief structures that produce different effects, the present method may simply rely on different irradiation steps to produce the different security devices. That is, the different devices may initially be provided with substantially the same plasmonic nanostructure arrangement. The method may involve, for example, modifying the plasmonic nanostructures differently when forming security devices intended for different denominations of a banknote, or may even involve personalising security devices, e.g. with a serial number for a banknote security device or personalisation data, such as a portrait, name, or nationality, for a passport security device.

Preferably, the method of forming each security device comprises a step of retrieving data associated with the security device being formed, and further comprises irradiating one or more regions in accordance with the retrieved data. For example, the method may involve consulting the memory of a computer to retrieve data defining the one or more regions to be irradiated. This may involve accessing a database to retrieve uniquely identifying information for a security device.

A most preferred way in which security devices may differ is by providing that the one or more regions of the first security device differ from the one or more regions of the second security device. That is, the areas modified are different. This may be used to provide different imagery to the optically variable effects of each device. Alternatively, or additionally, irradiation parameters used when irradiating the one or more regions of the first security device may differ from irradiation parameters used when irradiating the one or more regions of the second security device such that the optical response of the one or more regions of the first security device differs from the optical response of the one or more regions of the second security device. For example, the plasmonic nanostructures may be modified so that the different security devices produce optically variable effects in different visible colours.

In accordance with a third aspect of the invention, a method of forming a security device comprises: providing a substrate comprising an array of plasmonic nanostructures; providing an array of focussing elements over the substrate; irradiating a plurality of regions of the array of plasmonic nanostructures through the first array of focussing elements with electromagnetic radiation so as to modify the geometry of the plasmonic nanostructures in the plurality of regions and thereby modify the optical response of the array of plasmonic nanostructures in the plurality of regions; and removing the first array of focussing elements from over the substrate.

In this method, an array of focussing elements is used to irradiate a plurality of regions and modify the optical response of the nanostructures in those regions. This may be used to produce device that can be viewed without focussing elements or sampling elements.

The technique of irradiating plasmonic nanostructures to modify their geometry known in the art suffers from the problem that as larger areas are irradiated, more power is required to ensure that the threshold energy density is reached for modifying the geometry of all the exposed nanostructures. So, a large macroscopic image will require either a high power exposure or must be broken down into many exposures of much smaller areas, increasing the time taken to produce the device. In the present method, an array of focussing elements is used, which focusses the radiation onto the plasmonic nanostructures at a plurality of locations across the array, allowing a relatively large area to be patterned at once for a given energy of irradiation. This is because, rather than irradiating the whole area equally, the focussing element focusses the radiation at a plurality of locations across the nanostructure array meaning that the initial power density of the impinging radiation may be below the threshold for modifying the plasmonic nanostructures, but is focussed by the focussing elements to bring the energy density above the threshold.

This technique is particularly suited to producing macroscopic images for viewing on security documents without the aid of focussing element arrays, which is nonetheless visually discernible from printing techniques which may be used to attempt to counterfeit the device and so offers improved security. For example, the method may produce secure imagery on the order of millimetres or centimetres in lateral dimensions, for viewing with the naked eye, which nonetheless maintains a different appearance to convention printing, especially when closely inspected

The present technique is most effective when irradiating through the array of focussing elements comprises irradiating the array of focussing elements with substantially collimated electromagnetic radiation. This ensures the focussing elements are more effectively focussing the light onto the same region of the nanostructure array.

Preferably, irradiating the plurality of regions of the array of plasmonic nanostructures through the array of focussing elements comprises projecting an image formed in substantially collimated electromagnetic light through the array of focussing elements so as to irradiate the plurality of regions in accordance with the projected image. By projecting an image in collimated light through the focussing elements, each focussing element will project a different part of the image onto the nanostructure array below at the focal point of the focussing element. This will form an array of regions at the focal point of each focussing element that together corresponds to the projected image. While this modifies a relatively small area of the overall plasmonic nanostructure array, i.e. only regions corresponding to the focal point of each focussing element, when the focussing element array is removed, the image will be visible to a viewer, with the effective resolution of the image corresponding to the periodicity of the focussing element array.

The visibility of the image can be enhanced by modifying the geometry of the plasmonic nanostructures in additional regions. Therefore, preferably, the plurality of regions comprises a first plurality of regions and a second plurality of regions different from the first plurality of regions, and irradiating the plurality of regions of the array of plasmonic nanostructures through the array of focussing elements comprises irradiating the first plurality of regions, preferably simultaneously, through the array of focussing elements with electromagnetic radiation so as to modify the geometry of the plasmonic nanostructures in the first plurality of regions and then subsequently irradiating the second plurality of regions, preferably simultaneously, through the array of focussing elements with electromagnetic radiation so as to modify the geometry of the plasmonic nanostructures in the second plurality of regions. This may be done by changing the angle at which light impinges upon the focussing element array between the first and second irradiation steps, so that each focussing element focusses the light to a different region underlying that focussing element. However, preferably the method comprises moving the substrate relative to the first array of focussing elements after irradiating the first plurality of regions and before irradiating the second plurality of regions, such that the first plurality of regions are laterally offset from the second plurality of regions and preferable such that the first plurality of regions are spaced from the second plurality of regions. This changes where the focal point of each lens lays on the array of plasmonic nanostructures and avoids the need for complex systems for changing illumination angle.

Preferably, irradiating the first plurality of regions comprises projecting an image formed in substantially collimated electromagnetic light through the array of focussing elements and wherein irradiating the second plurality of regions comprises projecting the same image formed in substantially collimated electromagnetic light through the array of focussing elements. By projecting the same image through the focussing element array twice and irradiating different regions of the plasmonic nanostructure array, you double the number of plasmonic nanostructures that are modified in accordance with the image and so increase the visibility of the image.

As described above with respect to the first aspect, preferably, the step of irradiating plurality of regions of the array of plasmonic nanostructures is configured to modify the geometry of the plasmonic nanostructures such that the plasmonic nanostructures in the plurality of regions exhibit one or more visible colours in reflected light.

In many cases, the provided array of plasmonic nanostructures exhibit one or more visible colours in reflected light, and modifying the geometry of the plasmonic nanostructures in the plurality of regions modifies the colour exhibited by the plasmonic nanostructures in reflected light, such that the plasmonic nanostructures in the plurality of regions exhibit one or more visible colours different from the one or more visible colours exhibited by the provided array of plasmonic nanostructures. Preferably, the provided array of plasmonic nanostructures exhibits a substantially uniform colour in reflected light across the array, preferably a substantially uniform blue or white colour. Additionally, the plasmonic nanostructures of the provided array of plasmonic nanostructures vary in one or more of their shape, size and spacing across the array before irradiating with electromagnetic radiation. The variation in one or more of the shape, size and spacing of the plasmonic nanostructures may be such that the optical response of the array of plasmonic nanostructures varies across the array before irradiating with electromagnetic radiation.

As noted above with respect to the first aspect of the invention, irradiating the plurality of regions of the array of plasmonic nanostructures with electromagnetic radiation comprises at least partially photothermally melting the plasmonic nanostructures in the plurality of regions so as to modify their geometry. Preferably, irradiating the plurality of regions of the array of plasmonic with electromagnetic radiation comprises irradiating the plurality of regions with electromagnetic radiation from a laser.

In some embodiments, irradiating the plurality of regions of the array of plasmonic nanostructures comprises: irradiating one or more first regions of the array of plasmonic nanostructures through the first array of focussing elements with electromagnetic radiation in accordance with a first set of irradiation parameters so as to modify the geometry of the plasmonic nanostructures in the one or more first regions and thereby modify the optical response of the array of plasmonic nanostructures in the one or more first regions; and irradiating one or more second regions of the array of plasmonic nanostructures through the first array of focussing elements with electromagnetic radiation in accordance with a second set of irradiation parameters different from the first set of irradiation parameters so as to modify the geometry of the plasmonic nanostructures in the one or more second regions and thereby modify the optical response of the array of plasmonic nanostructures in the one or more second regions, such that the modified optical response of the one or more second regions is different from the modified optical response of the one or more first regions. Varying the irradiation parameters can be used, for example, to provide different regions with different colours in order to produce multi-coloured images. For example, these first and second regions may be provided by projecting an image through the focussing element array with different irradiation parameters in different areas of the projected image. These irradiation parameters may include a wavelength of the electromagnetic radiation, an irradiation duration, and/or an intensity of the electromagnetic radiation. Less preferably, in some cases, the irradiation may involve scanning the electromagnetic radiation and a scanning speed of the electromagnetic radiation may also be varied. As noted above, preferably, the step of irradiating the one or more first regions of the array of plasmonic nanostructures is configured to modify the geometry of the plasmonic nanostructures such that the plasmonic nanostructures in the one or first more regions exhibit a first visible colour in reflected light, and wherein the step of irradiating one or more second regions of the array of plasmonic nanostructures is configured to modify the geometry of the plasmonic nanostructures such that the plasmonic nanostructures in the one or second more regions exhibit a second visible colour in reflected light, different from the first visible colour. Other different optical responses may also be produced, as described above. Where these first and second regions correspond to different areas of the same image, the step of irradiating the one or more first regions with electromagnetic radiation is done substantially simultaneously with the step of irradiating the one or more second regions with electromagnetic radiation. This is in contrast with the first and second regions noted above, in which these represent subsequent exposures of the same image. In some cases first and second regions with different optical responses may be produced simultaneously by providing different irradiation parameters for forming the different regions, and then a third plurality of regions and a fourth plurality of regions may be formed by moving the substrate or changing the angle and performing the same exposure again.

In some embodiments, the array of focussing elements is adapted to focus light in one dimension. For example, the focussing elements may be cylindrical focussing elements. In this case, when substantially collimated light is projected through the focussing elements, each element will modify the geometry of the plasmonic nanostructures along a strip corresponding to the focal point of the focussing element. In other cases, the array of focussing elements may be adapted to focus light in at least two orthogonal directions. The focussing elements may be spherical or aspherical focussing elements. In this case, when substantially collimated light is projected through the focussing elements, each element will modify the geometry of the plasmonic nanostructures in an area corresponding to the focal point of the focussing element.

As with the first aspect, the array of plasmonic nanostructures may comprise a two-dimensional array of metal nanoplates disposed on a dielectric layer. In some embodiments, the array of plasmonic nanostructures comprises a two-dimensional array of nanopillars, each nanopillar comprising a body formed of a dielectric material and each nanopillar being topped by a metal nanoplate.

According to a fourth aspect of the invention, a plurality of security devices may be produced, each according to the third aspect of the invention, wherein the step of irradiating the plurality of regions when forming a first security device is performed differently to the step of irradiating the plurality of regions when forming a second security device such that the appearance of the first security device is different from the appearance of the second security device. This allows for personalization of the security device in the same manner described above with respect to the second aspect of the invention. The preferable features noted above with respect to the second aspect of the invention also apply to this aspect.

In accordance with a fifth aspect of the invention, there is provided a method of forming a security article comprising the method of forming a security device according to the first or third aspect, wherein the substrate is a substrate of the security article. Preferably, the security article is preferably a security thread, strip, patch, label, or transfer foil.

In accordance with a sixth aspect of the invention, there is provided a method of manufacturing a security document including a security device formed according to the first or third aspect, wherein either the substrate is a security document substrate, e.g. the substrate comprises the polymer substrate of a polymer banknote, such that the security device is formed on the security document substrate, or wherein the method further comprises applying the security device, optionally as a security article, to a security document substrate.

Of course, it will be appreciated that either the security article of the fifth aspect or the security document of the sixth aspect could be manufactured in pluralities in accordance with the second or fourth aspect, i.e. wherein different ones of the articles or documents have security devices exhibiting different optical effects.

In accordance with a seventh aspect of the invention, there is provided a security device formed using the above method of the first or third aspect.

**BRIEF DESCRIPTION OF THE DRAWINGS**

The present invention will now be described with reference to the following drawings, of which:

Figure 1 is a flow diagram of a method of forming a security device;
Figure 2 shows, schematically, a cross section of a security device during formation;
Figure 3 shows, schematically, a plan view of the security device of Figure 2 after formation;
Figures 4A to 4C show, schematically, a security document comprising the security device of Figures 2 and 3 at three different viewing angles respectively;
Figures 5A to 5C show, schematically, plasmonic nanostructures suitable for use in the security device of Figure 2, at three different levels of modification respectively;
Figure 6 shows, schematically, a cross section of another security device during formation;
Figure 7 shows, schematically, a plan view of the security device of Figure 6;
Figure 8 shows, schematically, a method of irradiating the security device so as to form image elements;
Figure 9 shows, schematically, a plan view of the security device after the method of Figure 8 has been performed;
Figure 10 shows, schematically, an alternative method of irradiating a security device so as to form image elements;
Figure 11 shows, schematically, a plan view of the security device after the method of Figure 10 has been performed;
Figure 12 shows, schematically, an apparatus suitable for performing the method of Figure 8 or 10;
Figure 13 shows, schematically, another apparatus suitable for performing the method of Figure 8 or 10.
Figures 14A and 14B show, schematically, a cross section and plan view, respectively, of a security device at a first stage during formation;
Figures 15A and 15B show, schematically, a cross section and plan view, respectively, of a security device at a second stage during formation;
Figures 16A and 16B show, schematically, a cross section and plan view, respectively, of a security device at a third stage during formation; and
Figure 17 shows, schematically, an apparatus suitable for performing the method of Figures 14A to 16B.

**DETAILED DESCRIPTION**

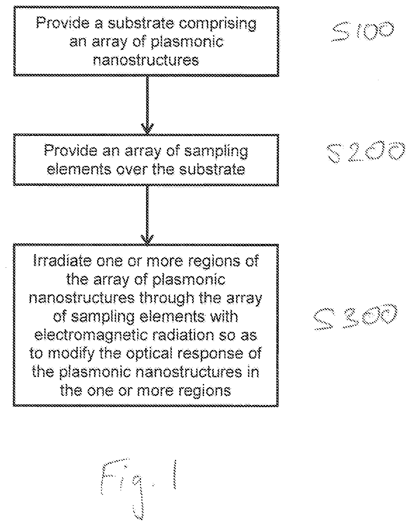

A first method of forming a security device will now be described with reference to Figures 1 to 4C.
Figure 1 is a flow diagram illustrating a method of forming a security device. The first step S100 of the method involves providing a substrate 10 comprising an array of plasmonic nanostructures 11.

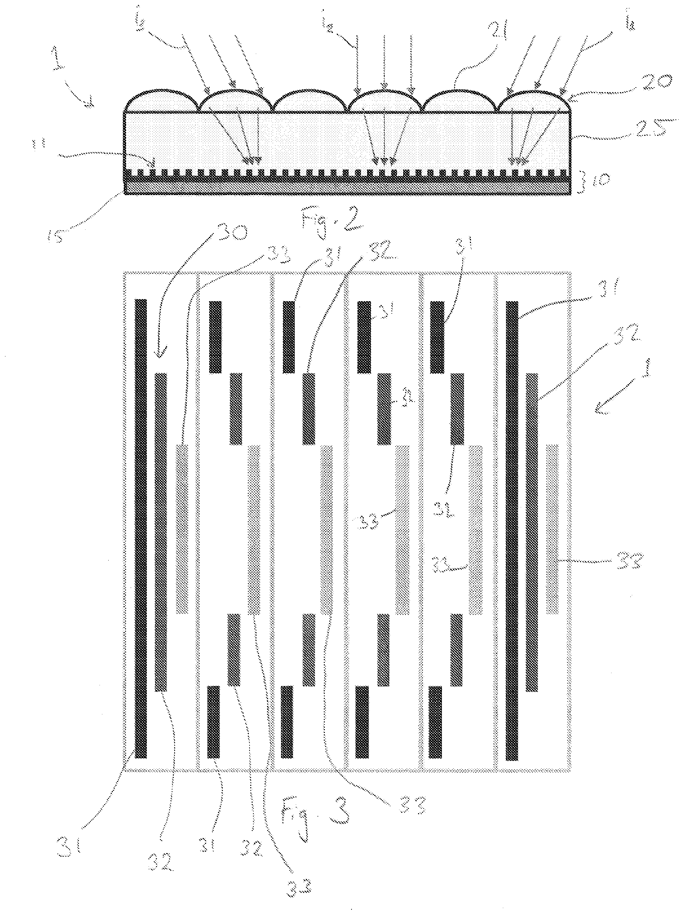

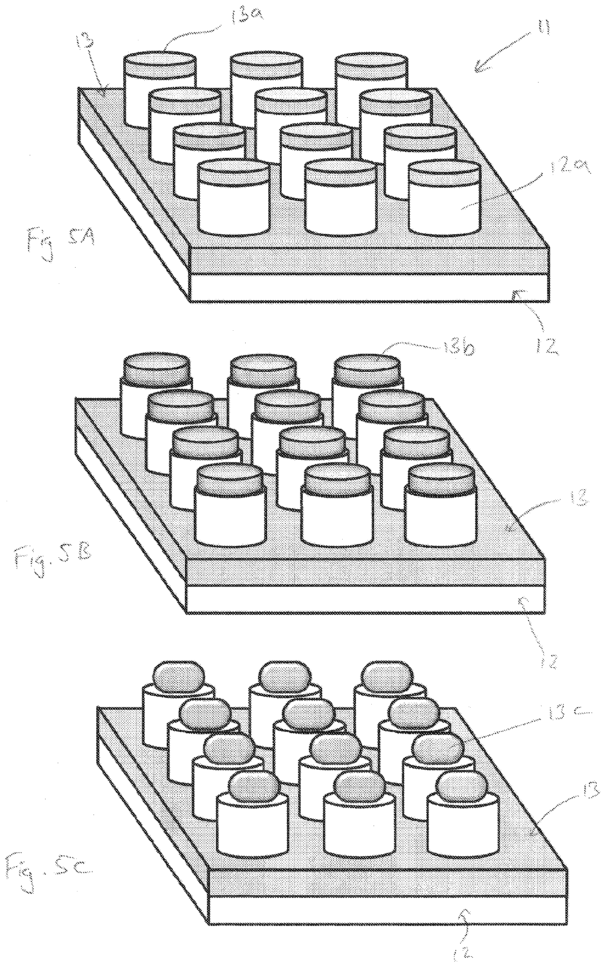

Figure 2 shows a security device 1 being formed, and shows the substrate 10 including the array of plasmonic nanostructures 11. The plasmonic nanostructures in this embodiment are carried on a support layer 15, which may be biaxially oriented polypropylene, for example. The plasmonic nanostructures themselves can be seen in more detail in Figure 5A, which shows the plasmonic nanostructures prior to modification. As can be seen in this Figure, the array of plasmonic nanostructures 11 includes a dielectric layer 12. The dielectric layer may be formed of acrylated oligomers such as acrylic esters of polyesters, polyethers, polyurethanes and epoxy resins, for example. The surface of the dielectric layer is structured so as to define an array of nanopillars 12a. The dielectric layer may be a UV curable dielectric layer, such that the array of nanopillars can be formed by cast-cure replication of a predetermined surface relief structure defining the array of nanopillars. The array of plasmonic nanostructures also comprises a metal layer 13. The metal layer has been directionally deposited onto the structured surface of the dielectric layer 12, perpendicular to the plane of the dielectric layer. Consequently, the metal layer 13 is received on the surface of dielectric layer in the areas between the nanopillars 12a and on the tops of the nanopillars. The metal layer as it is received on the tops of the nanopillars provide metal nanoplates 13a that exhibit local surface plasmon resonances, supressing the reflection of certain wavelengths of incident light. The wavelength of light that is supressed will depend on the shape, size and spacing of these nanopillars, since this will affect the shape, size and spacing of the nanoplates 13a received thereon. The initial optical response will therefore be influenced by the predetermined surface relief structure. For example, the structure may be configured such that the resulting plasmonic nanostructures formed after metal deposition act to supress light in the infrared so that the unmodified structure has no appreciable effect on visible light. Alternatively, the structure may be configured such that the plasmonic nanostructures have local surface plasmon resonances in the red portion of the visible spectrum.

Following the provision of the substrate with the array of functioning plasmonic nanostructures, a microlens array 20 is provided over the substrate so that it overlaps the array of plasmonic nanostructures in step S200. In the embodiment shown in Figure 2, the microlens array 20 is made up of a one-dimensional array of elongate hemi-cylindrical lens elements 21 arranged on a transparent optical spacer layer 25, that spaces the hemi-cylindrical lens elements 21 from the plasmonic nanostructures 11 such that they lay substantially in the focal plane of the lenses. The optical spacer layer may conform to the profile of the plasmonic nanostructure array 11, as shown in Figure 2, by being made of a transparent curable material. Alternatively, it may be preferred to coat the plasmonic nanostructure array with a relatively thin conformal overlayer during production of the substrate, which may then be more simply affixed to the lower surface of a transparent optical spacer layer, such as BOPP.

It should be noted that Figures 2 and 3 are highly schematic in their representation of a security device. For example, the Figures show the security device being made up of only 6 hemi-cylindrical lenses 21, but it will be appreciated that, in practice, many more will typically be used. For example, a typical microlens will have a width of between 5-200 micrometres, whereas the security device may be between several millimetres and several centimetres in width, i.e. along the repeat direction of the sampling element array. The array of plasmonic nanostructures, on the other hand, may have a periodicity of between 100-400 nanometres, for example.

Finally, in step S300, the plasmonic nanostructure array is irradiated through the array of microlenses 20 in order to modify the structure in one or more regions to define image elements 30. Figure 2 illustrates how light incident along different directions will be focussed to different areas of the focal plane, and hence to different areas of the plasmonic nanostructure array 11. Specifically, light that is incident along an incidence direction $i_2$ perpendicular to the plane of the security device is focussed towards a point at the centre of each lens element 21. Light that is incident along an incidence direction is from the left side of the security device is focussed towards the right side of the area under each lens 21 and, similarly, light that is incident along an incidence direction $i_1$ from the right side of the security device is focussed towards the left side of the area under each lens 21.

In this embodiment, this is used to form an array of image elements 30 comprising three sets of image elements 31, 32 and 33.

Firstly, the plasmonic nanostructures are irradiated through the array of lenses 20 along the first incidence direction $i_1$, i.e. from the right side of the security device 1 so as to modify the plasmonic nanostructures 11 towards the left side under each lens. This may be done with collimated laser irradiation from a high power pulsed laser. Collimated laser light irradiating a point may be scanned across the security device, i.e. up and down one more lenses at a time, turning on and off to modify the plasmonic nanostructures in a number of first regions to produce the first set of image elements 31. Alternatively, the laser may irradiate a line and a mask may be arranged between the laser and the lens array so that the line defined by the laser can be scanned across the security device in a single pass to irradiate the first regions defining the first set of image elements 31. As another alternative, the collimated laser light may be expanded and patterned, e.g. by an LCOS, before being incident on the security device along the desired direction. In this embodiment, the first regions that are modified define an image, being a large outline of a square. That is, each of the first set of image elements 31 underneath each lens is a corresponding "slice" or "strip" of the desired image, i.e. the large outline of a square.

Subsequently, the plasmonic nanostructures are again irradiated through the array of lenses 20, but this time along the second incidence direction $i_2$, i.e. perpendicular to the plane of the security device, so that the modified plasmonic nanostructures of this irradiation step are those centrally below each lens 21. This may be performed with the same laser used in the first irradiating step, but with its orientation changed to provide the required incidence direction. An array of second regions are irradiated, e.g. by scanning in the manner described above, to define a second set of image elements 32. In this case, the second image is a smaller outline of a square, i.e. one that is concentric with the square defined in the first set of image elements 31 and appears to lie entirely within this larger square.

Finally, the plasmonic nanostructures are irradiated one last time through the array of lenses 20, but this time along the third incidence direction $i_3$, i.e. from the left side of the security device 1 so as to modify the plasmonic nanostructures 11 towards the right side under each lens 21. This may again be performed by reorienting the same laser to achieve the desired incidence angle and may use a scanning technique as described above. An array of third regions are irradiated to define a third set of image elements 33, in this case a solid square, smaller than and concentric with the square outlines defined by the first and second sets of image elements 31, 32.

While the same irradiation parameters could be used throughout each of the three irradiation steps, i.e. at the differing incidence angles for producing the different sets of image elements 31, 32, 33 respectively, it is preferred that some variation of the irradiation parameters is used such that the plasmonic nanostructures are modified differently to produce different optical responses. Figures 5A to 5C illustrate how different irradiation parameters can produce different results in the modified plasmonic nanostructures, and hence result in different optical responses. Figure 5A shows a plasmonic nanostructure array prior to modification, i.e. as it appears after manufacture. In this case, the plasmonic nanostructures are formed by nanopillars structured in a dielectric layer. As mentioned above, these nanopillars are directionally coated with a metal layer, such as aluminium. As a result, the metal nanoplate 13a covers the entire top of the nanopillar. This structure may generate a blue colour, for example, or may exhibit no suppressive effect on reflected visible light. Exposure to appropriate radiation produces a thermal melting effect of the plasmonic nanostructures, causing the metal nanoplate to melt and contract, tending towards a sphere shape. Figure 5B shows the plasmonic nanostructures after exposure to radiation, in which the nanoplate 13b has contracted and thickened and slightly rounded. This plasmonic nanostructure will exhibit a different colour, from the plasmonic nanostructures of Figure 5A. The colour exhibited will be pushed towards the red end of the visible spectrum as the plasmon resonances are pushed towards the blue end of the spectrum by the change in geometry. For example, the colour exhibited by the structure may be a substantially green. Figure 5C shows the plasmonic nanostructure array with a more significant modification. For example, the plasmonic nanostructure array may have been exposed to radiation of higher intensity or with a shorter wavelength, or exposed for a longer period of time, e.g. by a slower scanning speed. As can be seen in Figure 5C, the exposure to radiation has caused more significant photothermal melting and the metal nanoplate has undergone a more significant contraction towards a spherical shape. The colour exhibited by this modified structure will be pushed further towards the red end of the visible spectrum than the structure shown in Figure 5B, as the plasmon resonances are pushed further towards the blue end of the spectrum by the change in geometry. For example, this structure may exhibit a substantially orange colour.

It will be appreciated that the colour of the plasmonic nanostructure array can be finely tuned by adjusting the irradiation parameters so that an array of colours are producible by the structure. The exact colours producible will also depend on the shape, size and spacing of the plasmonic nanostructures in their unmodified state, since this will affect the shape, size and spacing producible by modification. The starting array may be selected, as desired, so that a predetermined colour palette is available through the modification process. The available colours may be determined experimentally, by producing a plasmonic nanostructure array and observing the optical response at various levels of modification by radiation. It has also been observed that plasmonic nanostructure can be modified so that the metal nanoplate forms a substantially sphere shaped nanoelement, and beyond this the metal nanoplate may be ejected from the top of the nanopillar. In this case, the plasmonic effect may start to be driven by the nanoholes through the metal layer, and this nanohole may be enlarged through further irradiation. This provides further range to the colour palette available through the modification. This change in form of the plasmonic nanostructures is described in more detail in WO-A-2016198657.

In the embodiment of Figure 3, the first, second and third sets of elements are formed respectively by irradiating the plasmonic nanostructures with different irradiation parameters to achieve different visible colours. For example, each first image element 31 may be formed of modified regions having a first colour, each second image element may be formed of modified regions having a second colour and each third image element may be formed by modified regions having a third colour. While different colours are used for the different sets of image elements 31, 32, and 33, it would also be possible to vary the colours of the plasmonic nanostructures within each set. For example, the irradiation parameters could be varied during scanning such that different portions of the first set of image elements are in different colours.

While the embodiment described above uses a lens array that has been fixed over the nanostructure array and varies the incidence angle in order to irradiate the different regions under each lens, in another embodiment, the substrate may be moved relative to the lens array along the repeat direction of the lenses between the different irradiation steps. This allows the lens array to pattern different regions without the need to change the angle of irradiation. A lens array may then be fixed over the substrate once all image elements have been formed. An example of this stepped irradiation process will be described further below.

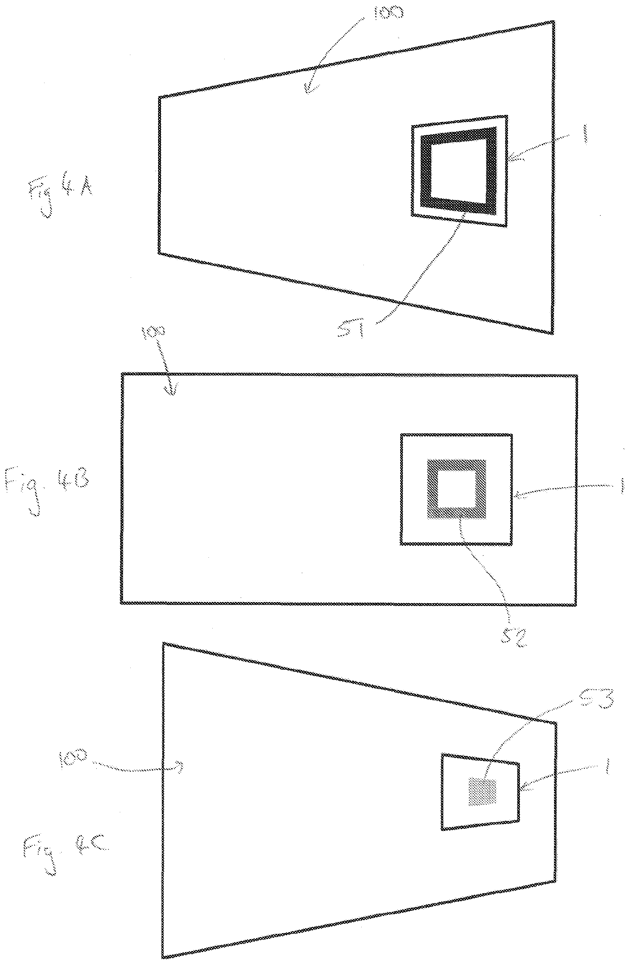

Figures 4A to 4C illustrate the appearance of a security document 100 carrying the security device 1 formed according to the above method. These Figures show the security device 1 provided on a security document 100 in the form of a banknote. This may be produced by providing the support layer 15, which carries the plasmonic nanostructure array, as the base polymer substrate of a polymeric banknote. An area of the substrate outside that carrying the plasmonic nanostructure array may be coated with one or more opacifying layers, printed with one or print layers, and provided with other features commonly found on polymeric banknotes, such as an antistatic coating and other security features. The security device may thereby be provided in a window or half-window region of the security document 100, for example.

Figure 4A shows the security document rotated so that the right side of the document, and hence the right side of the security device 1, is closer to the viewer than the left side of the security document/device. The viewer is therefore viewing the security device generally along the same direction as the first incidence direction $i_1$ used to record the first set of image elements 31. Accordingly, the viewer sees a first image 51, which results from the microlens array 20 displaying the first set of image elements 31, each of which is a "slice" of the first image 51, and substantially not displaying any of the other image elements. As outlined above, this first image is a large outline of a square, and may be seen in a first colour produced by a certain degree of modification of the plasmonic nanostructure array. This image may be seen on a coloured background provided by the unmodified plasmonic nanostructure array 11, or the background regions may not supress any wavelength of visible light to an appreciable extent.

Figure 4B shows the same security document 100, but viewed along a direction perpendicular to the plane of the security document. Now, the security device is being viewed along a direction corresponding to the second incidence direction $i_2$, used to record the second set of image elements 32. Accordingly, the viewer sees a second image 52, which results from the from the microlens array 20 displaying the second set of image elements 32, each of which is a "slice" of the first image 52, and substantially not displaying any of the other image elements. As outlined above, this second image is a smaller outline of a square concentric with the square of the first image 51. This second image 52 may be seen in a second colour different from the first colour and produced by a greater degree of modification of the plasmonic nanostructure array 11.

Finally, Figure 4C shows the security document rotated so that the left side of the document, and hence the left side of the security device 1, is closer to the viewer than the right side of the security document/device. The viewer is therefore viewing the security device generally along the same direction as the third incidence direction is used to record the third set of image elements 33. Accordingly, the viewer sees a third image 53, which results from the microlens array 20 displaying the third set of image elements 33, each of which is a "slice" of the third image 53, and substantially not displaying any of the other image elements. As outlined above, this third image is a small solid square that appears at the centre of the security device. This third image 53 may be seen in a third colour different from both the first and second colours and produced by a greater still degree of modification of the plasmonic nanostructure array 11.

As a result of these three images 51, 52, 53, rotation of the security device gives the impression of the expansion and contraction of a square while simultaneously changing colour. While a fairly simple series of images are used in this embodiment, it will be appreciated that there other more complex image designs may be used, as desired. It is also possible to provide more than only three image channels, and the maximum number of image channels will be determined by factors such as the manufacturing tolerance of arranging the plasmonic nanostructures in the focal plane of the lenses, the manufacturing tolerances of the lenses themselves, and the uniformity of incidence angle of the irradiating light.

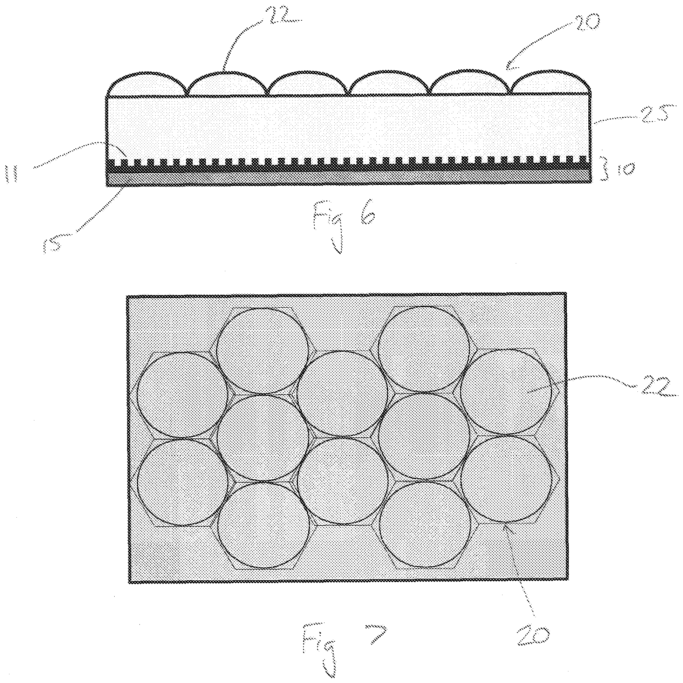

Another method of forming a security device will now be described with reference to Figures 6 to 9.

Figures 6 and 7 show a security device prior to any irradiation. As with the embodiment of Figure 2, the security device has a substrate 10 including the array of plasmonic nanostructures 11. The plasmonic nanostructures in this embodiment are carried on a support layer 15, which may be biaxially oriented polypropylene, for example. The plasmonic nanostructures for this embodiment may be identical to those used in the above Figure 2 embodiment. Indeed, this is one of the advantages of the invention, i.e. that entirely different security devices can be formed based on the same basic plasmonic nanostructure array. However, it will be appreciated that the plasmonic nanostructure array can also be selected, e.g. for its colour palette options, as desired for a particular device.

Following the provision of the substrate with the array of functioning plasmonic nanostructures, a microlens array 20 is provided over the substrate so that it overlaps the array of plasmonic nanostructures. In the embodiment shown in Figure 6, the microlens array 20 is made up of a two-dimensional array of hemispherical lens elements 22 arranged on a transparent optical spacer layer 25, that spaces the hemi-spherical lens elements 22 from the plasmonic nanostructures 11 such that they lay substantially in the focal plane of the lenses. In this embodiment, the hemi-spherical lenses 22 are arranged on a hexagonal-based grid, as can be seen in Figure 7, although any two-dimensional arrangement of lenses may be used.

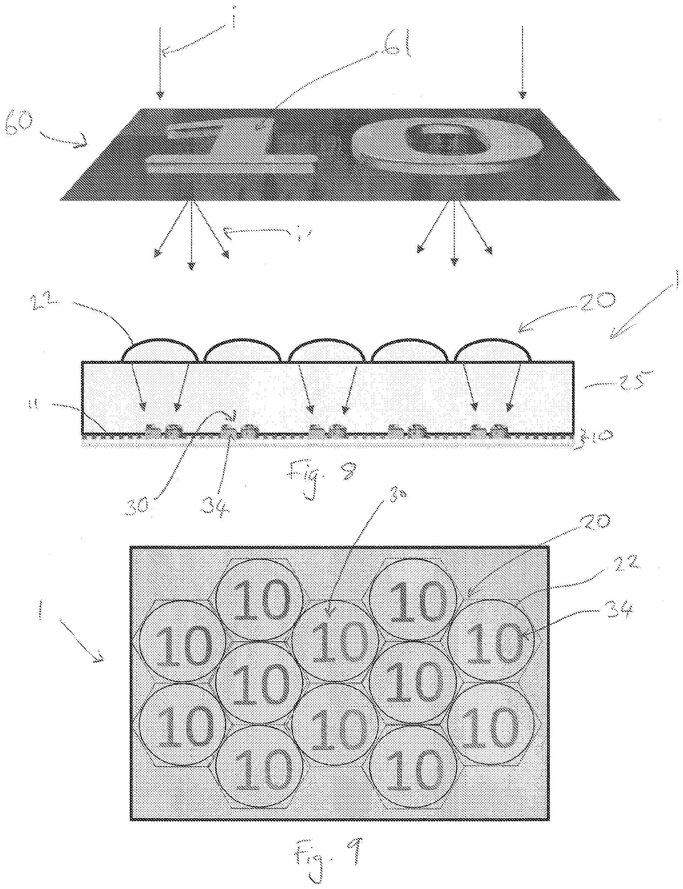

Figure 8 illustrates the step of irradiating the plasmonic nanostructures through the lens array 20 to define an array of image elements 30. As shown schematically in this Figure, a light field 60 is produced featuring a symbol 61, in this case "10". This symbol is produced using collimated light i emitted from a laser, but the light projected through the lenses has been diffused, so that the radiation i' projected towards the lenses is no longer collimated. An apparatus for producing such a light field 60 will be described in more detail below.

As mentioned, this image 61 is projected through the array of lenses 20. Since each lens is a hemi-spherical lens 22, each lens projects light onto the array of plasmonic nanostructures 11 defining a microimage version 34 of the image 61. Figure 9 shows the resulting microimage array 30, with an individual microimage version 34 of the symbol "10" under each hemi-spherical lens 22. In this embodiment, the light projected through the lenses has the same intensity and wavelength across the image 61 of the light field 60, and the whole image is projected for the same length of time. Thus, the plasmonic nanostructures 11 are modified by the incident light to substantially the same extent. Therefore, the regions of modified plasmonic nanostructures defining each microimage 34 have substantially the same modified optical response. In this embodiment, the background, i.e. unmodified plasmonic nanostructure, may be a generally blue colour, while the array of image elements 30 defining the individual microimages 34 may be modified so as to produce regions of a generally red colour in reflected light.

When the resulting security device is viewed by a viewer, each microlens 22 will display a different portion of the corresponding microimage 34 depending on the viewing angle. In this case, an integral image effect will be produced, whereby a synthetically magnified version of the symbol "10" is produced, which exhibits a 3D effect upon rotation of the security device.

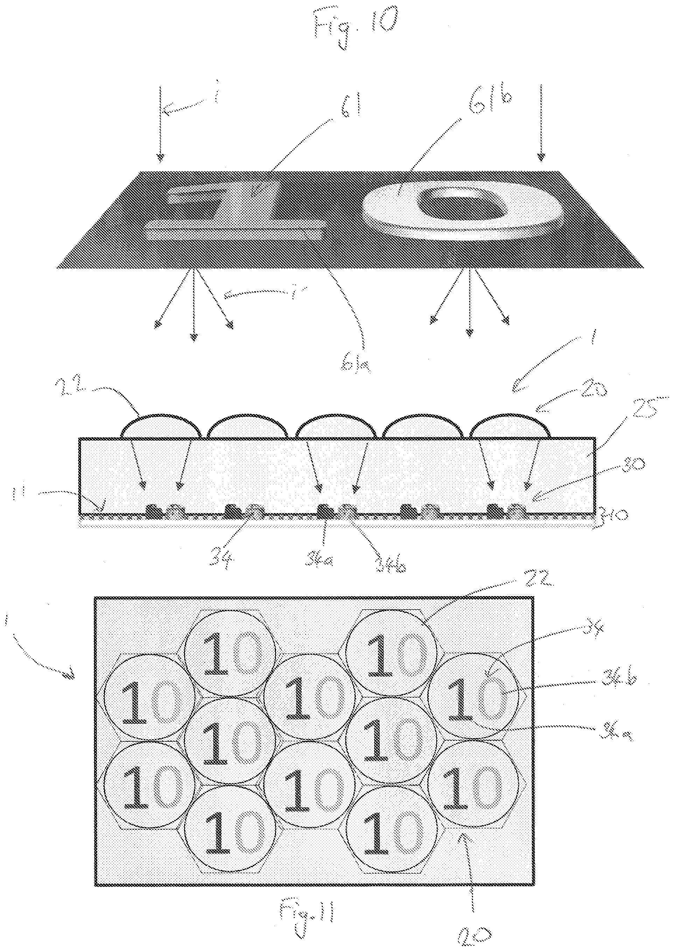

Figures 10 and 11 illustrate a modified version of this method, in which the light field 60 is produced such that the image 61 is defined with different irradiation parameters for the different portions. Specifically, the image 61, which is again a symbol "10", has a first part 61a, i.e. the number "1", and a second part 61b, i.e. the number "0". The first part 61a of this image is defined by radiation having a first intensity, and the second part 61b of the image is defined by radiation having a second intensity different from the first intensity. Again, an apparatus for producing this light field will be described in more detail below.

When this image is projected through the array of hemi-spherical lenses 22, the light will again be focussed by the lenses onto the array of plasmonic nanostructures 11, with each lens focussing light in the form of a microimage version 34 of the symbol "10". However, since the light projected through the lens array 20 had different intensities for different parts of the image 61, likewise, the light focussed onto the plasmonic nanostructures 11 will have different intensities. The result is that each microimage 34 will have a first part 34a, i.e. a microimage version of the number "1", and a second part 34b, i.e. a microimage version of the number "0". These first and second parts correspond to versions of the plasmonic nanostructure array that were subject to an irradiation step with different intensities. As a result, the plasmonic nanostructure array in the regions corresponding to these first and second parts 34a, 34b will have been modified differently, i.e. to a different extent. Accordingly, the plasmonic nanostructures in these regions will have a different optical response. For example, the first part 34a of each microimage 34 may have been subject to lower intensity radiation and so may appear a substantially green colour, whereas the second part 34b of each microimage 34 may have been subject to higher intensity radiation and so may appear a substantially red colour.

When the security device 1 is viewed by a viewer, each microlens 22 will display a different portion of the corresponding microimage 34 depending on the viewing angle. Again, an integral image effect will be produced, whereby a synthetically magnified version of the symbol "10" is produced, which exhibits a 3D effect upon rotation of the security device, but in this case, the number "1" and the number "0" will appear to be different colours. In contrast with a printed integral imaging device of this kind, however, the differently coloured numbers will be in perfect register with one another since they were produced in the same step.

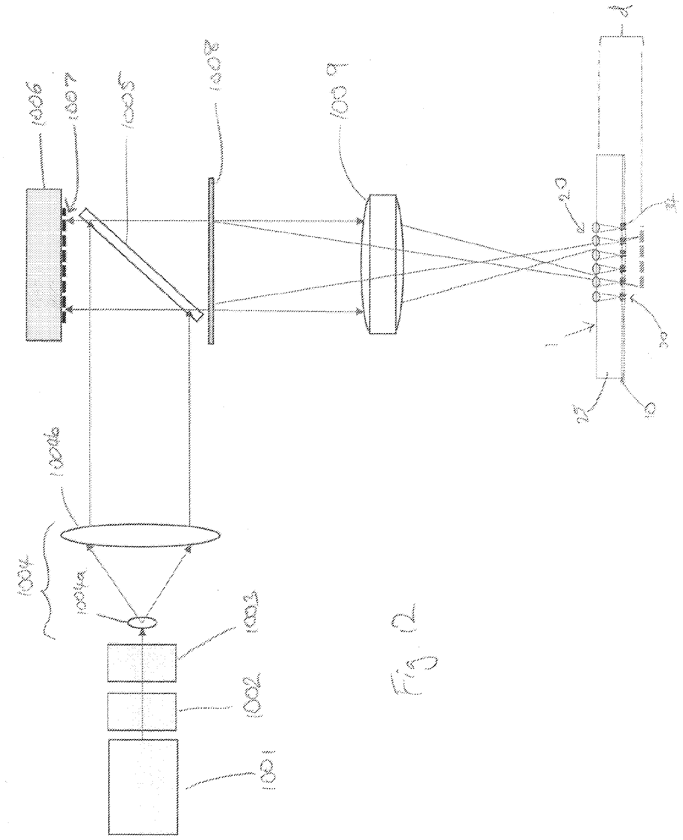

An apparatus for performing the methods described above with respect to Figures 8 and 9 or 10 and 11 will now be described with reference to Figure 12.

The apparatus comprises a laser 1001, which may be a CryLaS FDSS532-150 emitting 1 nanosecond pulses at a wavelength of 532 nanometres. The emitted laser light passes through an optical isolator 1002, which stops back reflection of the laser light being coupled back into the laser cavity, and an acousto-optic modulator 1003, which effectively acts as a high speed shutter and laser deflector, to condition the light beam. The emitted laser beam is then passed through a beam expander 1004 comprising an objective lens 1004a and an image lens 1004b. The beam expander is configured to produce a beam with a cross-section that is large enough to irradiate the entire surface of a downstream LCOS or SLM.

After passing through the beam expander 1004, the emitted light is passed through a beam splitter 1005 and on to the surface of an image generator 1006, such as an LCOS or SLM, carrying an image 1007. The image generator, in the case of the method of Figure 8 or Figure 10, would carry the symbol "10". Light reflected from the image generator 1006 will be patterned in accordance with the image 1007. That is, some areas of the image will reflect more light than others such that, in cross section, the light beam will have bright areas corresponding to areas of the image, in this case, the numbers "1" and "0", and dark areas, corresponding to the background. If the image is to be negatively defined, this will be reversed. For the method of Figure 8, the LCOS may carry a two tone image, such that the light has a single intensity in the areas defining the "1" and the "0", while for the method of Figure 10, the LCOS may carry an image in which the "1" and the "0" differ in tone so that the resulting light field has different intensities for the different parts of the image. It will be noted that the image carried by the LCOS can be freely changed and configured. For example, the method may involve retrieving image data from a database of a computer system linked to the LCOS for each security device to be manufactured. This could involve retrieving "5" or "10", depending on whether the security device is intended for a £5 or £10 banknote, or in some embodiments, could involve retrieving a serial number for one particular banknote, or identifying information if the security device is intended for a passport. It will be appreciated that different images can be programmed as desired and it is possible to record images on a security device by security device basis.

The patterned light field reflected off the image generator 1006 passes back through the beam splitter 1005 and onto a diffuser 1008, which decollimates the light, i.e. every illuminated point on the on the diffuser acts as point source scatterer, and effectively provides an object that is to be recorded through the microlenses (that is, each scattering point gets imaged by the lens array according to the standard lens equations). The positioning of this diffuser 1008 defines the object image distance. While a diffuser is used in this embodiment, in alternative embodiments, a diffuser could be omitted and the radiation would then record the image so that it is substantially only visible along the incidence direction of the light. The incidence angle could be varied using an arrangement of adjustable mirrors in order to record different images at different viewing angles.

In the illustrated embodiment, a projection lens 1009 is arranged between the diffuser 1008 and the security device 1, and the focal plane of this projection lens determines the apparent depth d of the integral image effect. In this embodiment, the focal plane of the projection lens lies behind the security device, and so the synthetically magnified version of the "10" will appear to float in a plane behind the security device. In alternative embodiments, the focal plane of the projection lens may be in front of the security device, such that the image appears to float in front of the security device, or no projection lens may be provided and light may pass from the diffuser directly through the microlens array 20. The light that is directed by the projection lens 1009 passes through the microlens array 20 and onto the array of plasmonic nanostructures 11 carried by the substrate 10 of the security device. This records the microimage array 30, which is made up of an array of microimages 34, each depicting the "10" displayed on the LCOS.

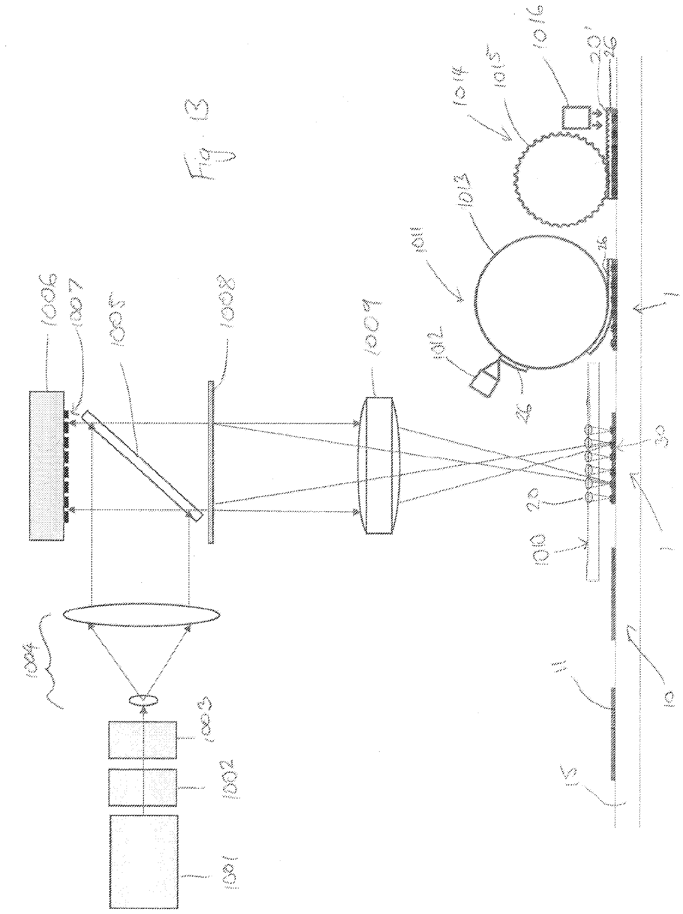

Figure 13 shows an apparatus for forming a moiré magnification device using the techniques described with respect to Figures 8 and 10. This embodiment is a web-based system that receives a web of substrate 10 comprising a support layer 15 and an array of plasmonic nanostructures 11 carried in discrete patches in certain areas of the support layer 15. It will be noted that the received web of substrate does not have an integral lens array provided over the array of plasmonic nanostructures.

As with the embodiment of Figure 12, the apparatus comprises a laser 1001, optical isolator 1002, acousto-optic modulator 1003, beam expander 1004, beam splitter 1005, image generator 1006, diffuser 1008 and projection lens 1009. This embodiment differs from the previous embodiment in that the security device provided does not include an integral lens array. As shown in this embodiment, a continuous web of substrate 10 is provided, which comprises a polymeric support layer 15, such as BOPP, and an array of plasmonic nanostructures 11 formed from a structured dielectric layer and deposited metal layer. Suitable substrates would be a web of security document substrate that will subsequently cut into individual security documents, such as banknotes, or a web of security article substrate, such as for producing a continuous security thread or a series of security patches, which again could be cut into individual security articles. In the illustrated embodiment, the substrate is a web of security document substrate and each area corresponding to a security document includes a security device 1, i.e. corresponding to the region comprising the array of plasmonic nanostructures 11. Each security device 1 of this web of substrate 10 is moved past a recording position, at which the plasmonic nanostructures are selectively irradiated. The apparatus for performing this irradiation step further comprises a fixed microlens unit 1010 comprising a two-dimensional microlens array 20 located so as to be between the projection lens 1009 and the array of plasmonic nanostructures 11 of the security device 1 in the recording position. The image is recorded into the array of plasmonic nanostructures 11 through the microlens array 20 of the fixed microlens unit 1010 by modifying the geometry of the plasmonic nanostructures in the manner described above.

Once the array of image elements 30 are recorded into the array of plasmonic nanostructures, the substrate web 10 is moved along the system, bringing the next security device 1 into the recording position for a subsequent irradiation step. In this embodiment, the security device moved downstream of the recording position is shown in the schematic representation of Figure 13 as being passed directly through a curable material application unit 1011 and a cast-cure unit 1014 to provide a second focussing element array over the plasmonic nanostructures. In practice, it may be preferred to perform the recording step described above and the application of a second focussing element array in separate in-line processes. For example, a spool of the substrate 10 may be provided and passed through a first web-based system in which the recording of the image element array 30 is performed, before the web of substrate is rewound onto another spool. In a subsequent process, this web of substrate 10 may be provided into a second web-based system, in which the web is unwound and passed through the below described system for providing the second focussing element array.

Whether performed in-line with the recording of the microimages or not, the substrate 10 comprising the plasmonic nanostructure array 11 carrying the recorded array of image elements 30 is provided to a curable material application unit 1011. The curable material application unit 1011 comprises a curable material applicator 1012 which selective applies curable material 26 onto an offset roller 1013. The roller 1013 rotates in contact with the moving web of substrate 10 and thereby brings the curable material 26 into contact with the surface of the substrate and transfers the curable material 26 over the array of plasmonic nanostructures 11. In this embodiment, the curable material is applied in discrete regions, substantially only coating the array of plasmonic nanostructures 11.

The substrate web 10 is moved downstream of the curable material application unit 1011 to a cast-cure unit 1014. The cast-cure unit comprises a casting roller 1015, whose surface defines a relief structure that is the negative of a desired array of microlenses 20'. This casting roller 1015 rotates in contact with the curable material 26 is it moves through the cast-cure unit 1014 and forms a second two-dimensional array of microlenses 20' into the surface of the curable material 26. In this embodiment, the second two-dimensional array of microlenses 20' has a pitch different to that of the fixed microlens unit 1010, and hence different to the recorded array of micro-images 30, such that the final security device 1 will exhibit a moiré magnified version of the array of microimages. The second array of microlenses 20' is fixed into the surface of the curable material by curing the material using a source of UV light 1016. Alternatively, a pre-formed microlens layer may be applied over the array of plasmonic nanostructures 11, e.g. using an adhesive to fix the microlens layer in place. The substrate is then moved downstream of the cast-cure unit 1014, where other finishing steps may be performed, such as applying opacifying coatings and print layers to complete the security document, and cutting into individual security documents.

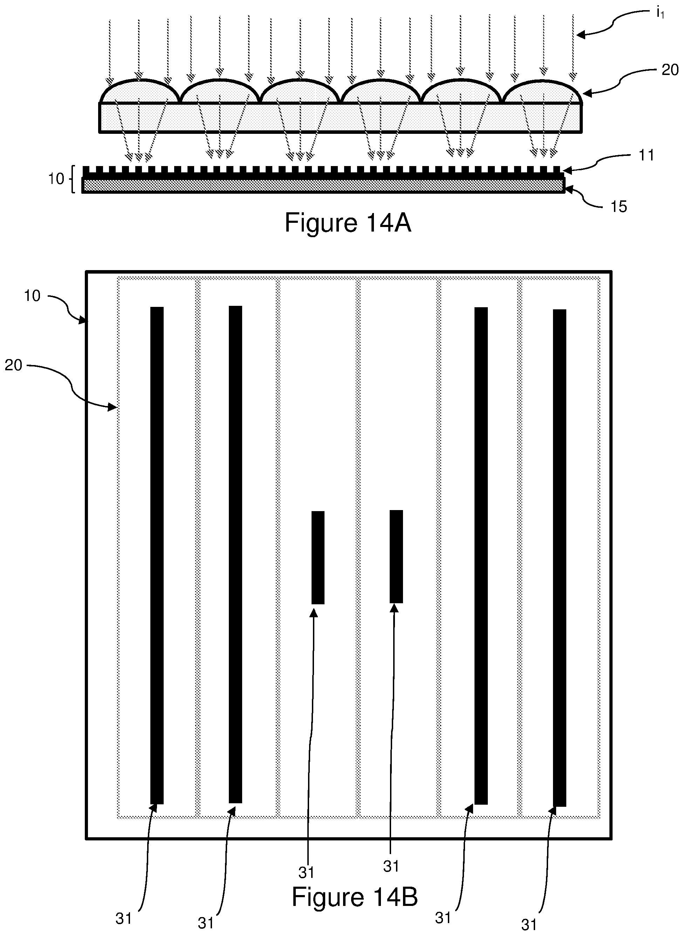

Another embodiment of forming a security device will now be described with respect to Figures 14A to 17.

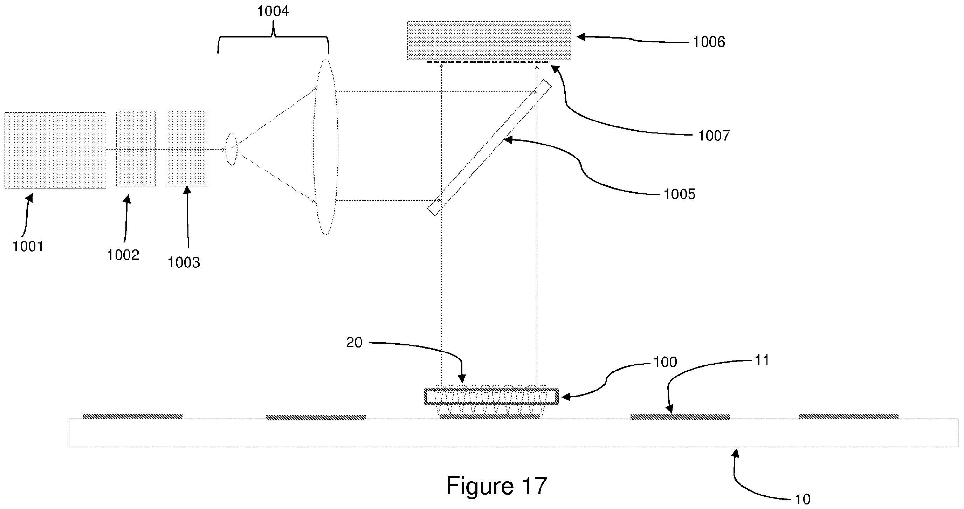

Figures 14A and 14B show a security device at a first stage during manufacture. In this embodiment, the lens array 20 is not fixed to the substrate before irradiation of the plasmonic nanostructure array. Instead, the lens array 20 is carried on a fixed microlens unit 1010 held over the substrate 10. As shown in the apparatus of Figure 17, the substrate 10 is preferably part of a continuous web of substrate that is conveyed beneath the apparatus. The apparatus comprises a laser 1001, optical isolator 1002, acousto-optic modulator 1003, beam expander 1004, beam splitter 1005, and image generator 1006, but does not comprise a diffuser or projection lens. Accordingly, the collimated light is patterned in accordance with the image on the image generator 1006 and is still collimated when it is incident upon the lens array 20. In this embodiment, the image generator 1006 carries an image of a letter 'H'. This may be personalised, for example, the first letter of someone's surname in the case that the security device is for an identity document. While a simple image is used here for simplicity, it will be appreciated that more complex images may also be projected, including those in which the intensity of the light varies across the image in such a way that different colours can be produced in different regions of the plasmonic nanostructure array, as discussed above.

Figure 14A shows the substrate 10 in a first position with respect to the lens array 20. At this position, the image of the letter 'H' is projected onto the lens array by collimated light $i_1$ along a direction perpendicular to the plane of the lens array. The focussing elements 20 focus the collimated light down onto the plasmonic nanostructure array 11 below. In this embodiment, the lens array 20 is an array of hemi-cylindrical lenses and so each lens focusses the light incident upon it down to a strip approximately at the focal point of the lens, where it impinges upon the plasmonic nanostructure array 11. Where the light impinges upon the plasmonic nanostructure array 11, the plasmonic nanostructures are modified, as discussed above. Accordingly, beneath each lens 20, an image element 31 is formed by a modified region of the plasmonic nanostructure array and each image element 31 carries a different slice of the image, as can be seen in Figure 14B.

In some embodiments, the lens array 20 could now be separated from the substrate 10 and the image would be discernible in the plasmonic nanostructure array 11 from the image slices 31 alone. However, in the present embodiment, in order to increase the prominence of the image, a number of subsequent exposures are performed to increase the area of modified plasmonic nanostructures.

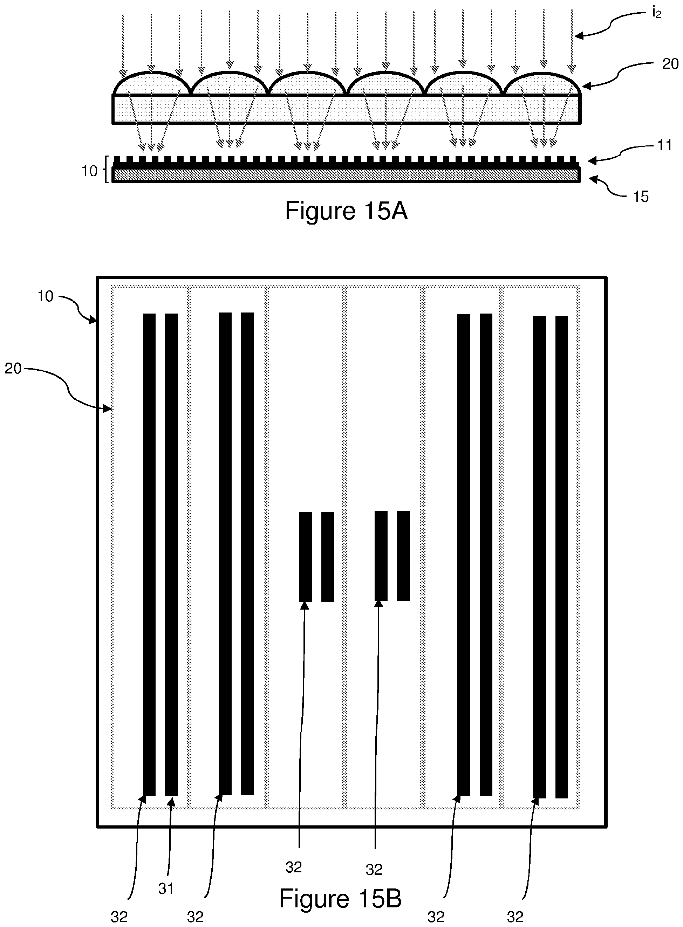

Figure 15A and Figure 15B show the security device at a second stage during production. Here, the lens array 20 has been moved relative to the substrate 10 along the repeat direction of the lens array by a distance approximately equal to a third of the periodicity of the lens array 20. Now, the apparatus projects the same image using the laser 1001, optical isolator 1002, acousto-optic modulator 1003, beam expander 1004, beam splitter 1005, and image generator 1006, in collimated light $i_2$ through the lenses 20 and onto the array of plasmonic nanostructures 11. Because the plasmonic nanostructure array 11 has been moved relative to the lenses 20, the focal point of the lenses now modifies the plasmonic nanostructures in a second plurality of regions forming image elements 32 spaced from the image elements 31. By projecting the image through the lens array 20 again, this doubles the area in which the plasmonic nanostructures have been modified in accordance with the image and so increases the visibility and colour saturation of the final image displayed by the security device.

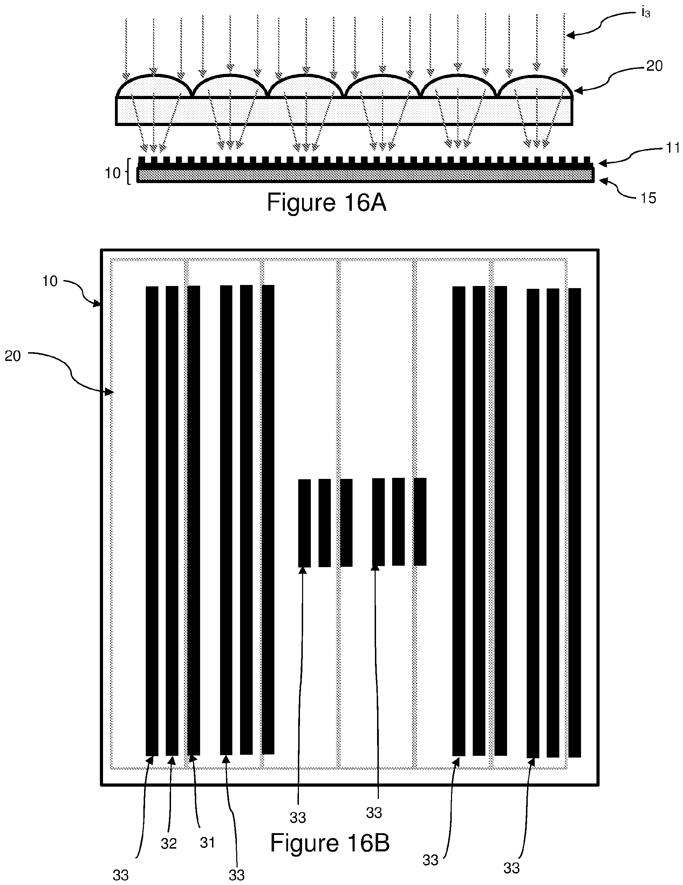

Finally, the image is projected in collimated light $i_3$ for a third time, as shown in Figures 16A and 16B, after the lens array 20 has again been moved relative to the substrate by a distance corresponding to approximately one third of the periodicity of the lens array. This forms a set of image elements 33, each of which again carries a different slice of the same projected image.

Now the substrate 10 advances along the length of the substrate web to separate from the lenses 20 and a subsequent security device may now be recorded by the apparatus. When the security device is inspected, a viewer will see an image of a letter 'H' and when inspected closely this will reveal the arrays of image strips 31, 32, 33.

While in the above embodiment, the same image is projected through the lens array three times to form a single macroscopic image that is viewable without an overlying lens array, this stepping technique could also be used to project three different images for recording in the plasmonic nanostructure array. The security device may then be completed by applying a lens array having the same periodicity as the array used to record the image elements over the plasmonic nanostructures. This lens array would then sample different sets of image strips 31, 32, 33 depending on viewing angle, and so would allow a different one of the images to be reconstructed at different viewing angles.

It should also be noted that while the above method uses cylindrical lenses with three irradiation steps, this technique could also be performed with two-dimensional arrays of focussing elements. Such a method would form a two-dimensional array of image elements with each exposure step and would preferably involve stepping the lens array in both lateral dimensions when performing subsequent irradiation steps.

While the above has focussed primarily on forming the security devices directly on security documents, this is not essential. Security devices of the sorts described above are suitable for forming on security articles such as threads, stripes, patches, foils and the like which can then be incorporated into or applied onto security documents such as banknotes.

Security devices of the sorts described above can be incorporated into or applied to any product for which an authenticity check is desirable. In particular, such devices may be applied to or incorporated into documents of value such as banknotes, passports, driving licences, cheques, identification cards etc. The security device can either be formed directly on the security document (e.g. on a polymer substrate forming the basis of the security document) or may be supplied as part of a security article, such as a security thread or patch, which can then be applied to or incorporated into such a document. The security device may be applied to a security document, for example by using a pressure sensitive adhesive.

Such security articles can be arranged either wholly on the surface of the base substrate of the security document, as in the case of a stripe or patch, or can be visible only partly on the surface of the document substrate, e.g. in the form of a windowed security thread. Security threads are now present in many of the world's currencies as well as vouchers, passports, travellers' cheques and other documents. In many cases the thread is provided in a partially embedded or windowed fashion where the thread appears to weave in and out of the paper and is visible in windows in one or both surfaces of the base substrate. One method for producing paper with so-called windowed threads can be found in EP-A-0059056. EP-A-0860298 and WO-A-03095188 describe different approaches for the embedding of wider partially exposed threads into a paper substrate. Wide threads, typically having a width of 2 to 6mm, are particularly useful as the additional exposed thread surface area allows for better use of optically variable devices, such as that presently disclosed.

Base substrates suitable for making security substrates for security documents may be formed from any conventional materials, including paper and polymer. Techniques are known in the art for forming substantially transparent regions in each of these types of substrate. For example, WO-A-8300659 describes a polymer banknote formed from a transparent substrate comprising an opacifying coating on both sides of the substrate. The opacifying coating is omitted in localised regions on both sides of the substrate to form a transparent region. In this case the transparent substrate can be an integral part of the security element or a separate security element can be applied to the transparent substrate of the document. WO-A-0039391 describes a method of making a transparent region in a paper substrate.

The security device may also be applied to one side of a paper substrate, optionally so that portions are located in an aperture formed in the paper substrate. An example of a method of producing such an aperture can be found in WO-A-03054297. An alternative method of incorporating a security element which is visible in apertures in one side of a paper substrate and wholly exposed on the other side of the paper substrate can be found in WO-A-2000/39391.

The security device of the current invention can be made machine readable by the introduction of detectable materials into one or more of the layers or by the introduction of separate machine-readable layers. Detectable materials that react to an external stimulus include but are not limited to fluorescent, phosphorescent, infrared absorbing, thermochromic, photochromic, magnetic, electrochromic, conductive and piezochromic materials.

Particularly in embodiments in which plasmonic nanostructures comprising a layer of aluminium are used, the security device can be used to conceal the presence of a machine readable dark magnetic layer, for example, provided beneath the dielectric layer of the plasmonic nanostructures. When a magnetic material is incorporated into the device the magnetic material can be applied in any design but common examples include the use of magnetic tramlines or the use of magnetic blocks to form a coded structure. Suitable magnetic materials include iron oxide pigments ($Fe_2O_3$ or $Fe_3O_4$), barium or strontium ferrites, iron, nickel, cobalt and alloys of these. In this context the term "alloy" includes materials such as Nickel:Cobalt, Iron:Aluminium:Nickel:Cobalt and the like. Flake Nickel materials can be used; in addition Iron flake materials are suitable. Typical nickel flakes have lateral dimensions in the range 5-50 microns and a thickness less than 2 microns. Typical iron flakes have lateral dimensions in the range 10-30 microns and a thickness less than 2 microns.

**Claims**

1. A method of forming a security device, the method comprising:

   providing a substrate comprising an array of plasmonic nanostructures;
   providing a first array of sampling elements over the substrate; and
   irradiating one or more regions of the array of plasmonic nanostructures through the first array of sampling elements with electromagnetic radiation so as to modify the geometry of the plasmonic nanostructures in the one or more regions and thereby modify the optical response of the array of plasmonic nanostructures in the one or more regions;
   wherein said one or more regions define an array of image elements configured for viewing through an array of sampling elements such that an optically variable effect is exhibited by the array of sampling elements and the array of image elements in combination in dependence upon the viewing angle.

2. A method according to claim 1, wherein the step of irradiating one or more regions of the array of plasmonic nanostructures is configured to modify the geometry of the plasmonic nanostructures such that the plasmonic nanostructures in the one or more regions exhibit one or more visible colours in reflected light.

3. A method according to claim 1 or claim 2, wherein the provided array of plasmonic nanostructures exhibit one or more visible colours in reflected light, and wherein modifying the geometry of the plasmonic nanostructures in the one or more regions modifies the colour exhibited by the plasmonic nanostructures in reflected light, such that the plasmonic nanostructures in the one or more regions exhibit one or more visible colours different from the one or more visible colours exhibited by the provided array of plasmonic nanostructures, wherein preferably either the provided array of plasmonic nanostructures exhibits a substantially uniform colour in reflected light across the array, preferably a substantially uniform blue or white colour.

4. A method according to any of the preceding claims, wherein irradiating one or more regions of the array of plasmonic with electromagnetic radiation comprises irradiating the one or more regions with electromagnetic radiation from a laser and/or comprises at least partially photothermally melting the plasmonic nanostructures in the one or more regions so as to modify their geometry.

5. A method according to any of the preceding claims, wherein irradiating one or more regions of the array of plasmonic with electromagnetic radiation comprises scanning the electromagnetic radiation across the one or more regions and/or comprises projecting an image through the first array of sampling elements so as to irradiate the one or more regions in accordance with the projected image.

6. A method according to any of the preceding claims, wherein the one or more regions comprise one or more first regions and one or more second regions different from the one or more first regions, wherein the one or more first regions define a first subset of the array of image elements and wherein the one or more second regions define a second subset of the array of image elements, wherein the first and second subsets of the array of image elements are configured such that at a first viewing angle the first subset of the array of image elements is displayed by the array of sampling elements and such that at a second viewing angle, different from the first viewing angle, the second subset of the array of image elements is displayed by the array of sampling elements.

7. A method according to any of the preceding claims, wherein irradiating one or more regions of the array of plasmonic nanostructures comprises: irradiating one or more first regions of the array of plasmonic nanostructures through the first array of sampling elements with electromagnetic radiation in accordance with a first set of irradiation parameters so as to modify the geometry of the plasmonic nanostructures in the one or more first regions and thereby modify the optical response of the array of plasmonic nanostructures in the one or more first regions; and, preferably simultaneously with irradiating the one or more first regions, irradiating one or more second regions of the array of plasmonic nanostructures through the first array of sampling elements with electromagnetic radiation in accordance with a second set of irradiation parameters different from the first set of irradiation parameters so as to modify the geometry of the plasmonic nanostructures in the one or more second regions and thereby modify the optical response of the array of plasmonic nanostructures in the one or more second regions, such that the modified optical response of the one or more second regions is different from the modified optical response of the one or more first regions, wherein preferably the irradiation parameters include a wavelength of the electromagnetic radiation, an irradiation duration, a scanning speed of the electromagnetic radiation, and/or an intensity of the electromagnetic radiation, and/or wherein preferably the step of irradiating one or more first regions of the array of plasmonic nanostructures is configured to modify the geometry of the plasmonic nanostructures such that the plasmonic nanostructures in the one or first more regions exhibit a first visible colour in reflected light, and wherein the step of irradiating one or more second regions of the array of plasmonic nanostructures is configured to modify the geometry of the plasmonic nanostructures such that the plasmonic nanostructures in the one or second more regions exhibit a second visible colour in reflected light, different from the first visible colour.

8. A method according to any of the preceding claims, wherein said one or more regions define an array of microimages, and wherein the optically variable effect exhibited by the array of sampling elements and the array of image elements in combination in dependence upon the viewing angle comprises a synthetically magnified version of the array of microimages.

9. A method according to any of the preceding claims, wherein the array of plasmonic nanostructures comprises a two dimensional array of metal nanoplates disposed on a dielectric layer, wherein preferably the array of plasmonic nanostructures comprises two-dimensional array of nanopillars, each nanopillar comprising a body formed of a dielectric material and each nanopillar being topped by a metal nanoplate.

10. A method according to any of the preceding claims, wherein either: providing the first array of sampling elements over the substrate comprises affixing the first array of sampling elements over the substrate such that the first array of sampling elements act as said array of sampling elements and the optically variable effect is exhibited by the first array of sampling elements and the array of image elements in combination in dependence upon the viewing angle; or further comprising removing the first array of sampling elements from over the substrate and affixing a second array of sampling elements over the substrate such that the second array of sampling elements act as said array of sampling elements and the optically variable effect is exhibited by the second array of sampling elements and the array of image elements in combination in dependence upon the viewing angle, wherein preferably the pitch and/or orientation of the first array of sampling elements differs from that of the second array of sampling elements such that the optically variable effect exhibited by the second array of sampling elements and the array of image elements in combination is at least in part due to the moire effect.

11. A method according to any of the preceding claims, wherein irradiating one or more regions of the array of plasmonic nanostructures through the first array of sampling elements comprises irradiating the sampling elements with diffuse electromagnetic radiation, wherein preferably irradiating the sampling elements with diffuse electromagnetic radiation comprises patterning collimated electromagnetic radiation and passing the patterned collimated electromagnetic radiation through a diffuser and/or comprises projecting an image formed in substantially collimated electromagnetic radiation through a diffuser.

12. A method according to any of claims 1 to 11, wherein irradiating the one or more regions of the array of plasmonic nanostructures through the first array of sampling elements comprises irradiating the sampling elements with substantially collimated electromagnetic radiation, wherein preferably irradiating one or more regions of the array of plasmonic with electromagnetic radiation comprises projecting an image through the first array of sampling elements so as to irradiate the one or more regions in accordance with the projected image and wherein the projected image is formed in substantially collimated electromagnetic radiation, wherein further preferably the one or more regions comprise one or more first regions and one or more second regions different from the one or more first regions, and wherein irradiating the one or more regions of the array of plasmonic nanostructures through the first array of sampling elements comprises irradiating the one or more first regions through sampling elements by irradiating the sampling elements with substantially collimated electromagnetic radiation, moving the substrate relative to the first array of sampling elements, and then irradiating the one or more second regions through sampling elements by irradiating the sampling elements with substantially collimated electromagnetic radiation, and wherein further preferably irradiating the one or more first regions comprises projecting a first image formed in substantially collimated electromagnetic radiation through the first array of sampling elements and wherein irradiating the one or more second regions comprises projecting a second image formed in substantially collimated electromagnetic radiation through the first array of sampling elements, wherein preferably the first image is different from the second image .

13. A method according to any of the preceding claims, wherein the first and/or second array of sampling elements comprises an array of focussing elements, wherein preferably the array of focussing elements comprises focussing elements adapted to focus light in one dimension, preferably cylindrical focussing elements, or adapted to focus light in at least two orthogonal directions, preferably spherical or aspherical focussing elements, wherein preferably the array of focussing elements comprises an array of lenses.

**14.** A method of forming a plurality of security devices, each formed according to the method of any of claims 1 to 13, wherein the step of irradiating one or more regions when forming a first security device is performed differently to the step of irradiating one or more regions when forming a second security device such that the optically variable effect exhibited by the first security device is different from the optically variable effect exhibited by the second security device, wherein preferably the method of forming each security device comprises a step of retrieving data associated with the security device being formed, and further comprises irradiating one or more regions in accordance with the retrieved data, and/or wherein preferably either the one or more regions of the first security device differ from the one or more regions of the second security device, or irradiation parameters used when irradiating the one or more regions of the first security device differ from irradiation parameters used when irradiating the one or more regions of the second security device such that the optical response of the one or more regions of the first security device differs from the optical response of the one or more regions of the second security device.

**15.** A method of forming a security device, the method comprising:

    providing a substrate comprising an array of plasmonic nanostructures;
    providing an array of focussing elements over the substrate;
    irradiating a plurality of regions of the array of plasmonic nanostructures through the first array of focussing elements with electromagnetic radiation so as to modify the geometry of the plasmonic nanostructures in the plurality of regions and thereby modify the optical response of the array of plasmonic nanostructures in the plurality of regions; and
    removing the first array of focussing elements from over the substrate.

**16.** A method according to claim 15, wherein irradiating through the array of focussing elements comprises irradiating the array of focussing elements with substantially collimated electromagnetic radiation, wherein preferably irradiating the plurality of regions of the array of plasmonic nanostructures through the array of focussing elements comprises projecting an image formed in substantially collimated electromagnetic light through the array of focussing elements so as to irradiate the plurality of regions in accordance with the projected image.

**17.** A method according to any of claims 15 to 16, wherein the plurality of regions comprises a first plurality of regions and a second plurality of regions different from the first plurality of regions, wherein irradiating the plurality of regions of the array of plasmonic nanostructures through the array of focussing elements comprises irradiating the first plurality of regions, preferably simultaneously, through the array of focussing elements with electromagnetic radiation so as to modify the geometry of the plasmonic nanostructures in the first plurality of regions and then subsequently irradiating the second plurality of regions, preferably simultaneously, through the array of focussing elements with electromagnetic radiation so as to modify the geometry of the plasmonic nanostructures in the second plurality of regions, preferably comprising moving the substrate relative to the first array of focussing elements after irradiating the first plurality of regions and before irradiating the second plurality of regions, such that the first plurality of regions are laterally offset from the second plurality of regions and preferable such that the first plurality of regions are spaced from the second plurality of regions, and/or wherein preferably irradiating the first plurality of regions comprises projecting an image formed in substantially collimated electromagnetic light through the array of focussing elements and wherein irradiating the second plurality of regions comprises projecting the same image formed in substantially collimated electromagnetic light through the array of focussing elements.

**18.** A method according to any claims 15 to 17, wherein irradiating the plurality of regions of the array of plasmonic nanostructures comprises: irradiating one or more first regions of the array of plasmonic nanostructures through the first array of focussing elements with electromagnetic radiation in accordance with a first set of irradiation parameters so as to modify the geometry of the plasmonic nanostructures in the one or more first regions and thereby modify the optical response of the array of plasmonic nanostructures in the one or more first regions; and, preferably substantially simultaneously with the step of irradiating the one or more first regions with electromagnetic radiation, irradiating one or more second regions of the array of plasmonic nanostructures through the first array of focussing elements with electromagnetic radiation in accordance with a second set of irradiation parameters different from the first set of irradiation parameters so as to modify the geometry of the plasmonic nanostructures in the one or more second regions and thereby modify the optical response of the array of plasmonic nanostructures in the one or more second regions, such that the modified optical response of the one or more second regions is different from the modified optical response of the one or more first regions, wherein preferably the irradiation parameters include a wavelength of the electromagnetic radiation, an irradiation duration, a scanning speed of the electromagnetic radiation, and/or an intensity of the electromagnetic radiation, and/or wherein preferably the step of irradiating the one or more first regions of the array of plasmonic nanostructures is configured to modify the geometry of the plasmonic nanostructures such that the plasmonic nanostructures in the one or first more regions exhibit a first visible colour in reflected light, and wherein the step of irradiating one or more second regions of the array of plasmonic nanostructures is configured to modify the geometry of the plasmonic nanostructures such that the plasmonic nanostructures in the one or second more regions exhibit a second visible colour in reflected light, different from the first visible colour.

19. A security device formed according to the method of any of claims 1 to 13 or according to the method of any of claims 15 to 18.

**Patentansprüche**

1. Verfahren zum Bilden einer Sicherheitsvorrichtung, das Verfahren umfassend:

> Bereitstellen eines Substrats, umfassend ein Array von plasmonischen Nanostrukturen;
> Bereitstellen eines ersten Arrays von Abtastelementen über dem Substrat; und
> Bestrahlen einer oder mehrerer Regionen des Arrays von plasmonischen Nanostrukturen durch das erste Array von Abtastelementen mit elektromagnetischer Strahlung zum Modifizieren der Geometrie der plasmonischen Nanostrukturen in der einen oder den mehreren Regionen und dadurch Modifizieren der optischen Reaktion des Arrays von plasmonischen Nanostrukturen in der einen oder den mehreren Regionen;
> wobei die eine oder die mehreren Regionen ein Array von Bildelementen definieren, die zum Anzeigen durch ein Array von Abtastelementen ausgelegt sind, sodass das Array von Abtastelementen und das Array von Bildelementen in Kombination in Abhängigkeit vom Betrachtungswinkel einen optisch variablen Effekt zeigen.

2. Verfahren nach Anspruch 1, wobei der Schritt des Bestrahlens einer oder mehrerer Regionen des Arrays von plasmonischen Nanostrukturen zum Modifizieren der Geometrie der plasmonischen Nanostrukturen ausgelegt ist, sodass die plasmonischen Nanostrukturen in der einen oder den mehreren Regionen eine oder mehrere sichtbare Farben in reflektiertem Licht zeigen.

3. Verfahren nach Anspruch 1 oder Anspruch 2, wobei das bereitgestellte Array von plasmonischen Nanostrukturen eine oder mehrere sichtbare Farben in reflektiertem Licht zeigt und wobei das Modifizieren der Geometrie der plasmonischen Nanostrukturen in der einen oder den mehreren Regionen die Farbe, die die plasmonischen Nanostrukturen in reflektiertem Licht zeigen, modifiziert, sodass die plasmonischen Nanostrukturen in der einen oder den mehreren Regionen eine oder mehrere sichtbare Farben zeigen, die von der einen oder den mehreren sichtbaren Farben, die das bereitgestellte Array von plasmonischen Nanostrukturen zeigt, verschieden sind, wobei vorzugsweise entweder das bereitgestellte Array von plasmonischen Nanostrukturen eine im Wesentlichen gleichmäßige Farbe in reflektiertem Licht über das Array, vorzugsweise eine im Wesentlichen gleichmäßige blaue oder weiße Farbe, zeigt.

4. Verfahren nach einem der vorstehenden Ansprüche, wobei das Bestrahlen einer oder mehrerer Regionen des Arrays von plasmonischen mit elektromagnetischer Strahlung ein Bestrahlen der einen oder der mehreren Regionen mit elektromagnetischer Strahlung von einem Laser umfasst und/oder mindestens teilweise ein photothermisches Schmelzen der plasmonischen Nanostrukturen in der einen oder den mehreren Regionen umfasst, um deren Geometrie zu modifizieren.

5. Verfahren nach einem der vorstehenden Ansprüche, wobei das Bestrahlen einer oder mehrerer Regionen des Arrays von plasmonischen mit elektromagnetischer Strahlung ein Abtasten der elektromagnetischen Strahlung über die eine oder die mehreren Regionen umfasst und/oder Projizieren eines Bilds durch das erste Array von Abtastelementen, um die eine oder die mehreren Regionen gemäß dem projizierten Bild zu bestrahlen, umfasst.

6. Verfahren nach einem der vorstehenden Ansprüche, wobei die eine oder die mehreren Regionen eine oder mehrere erste Regionen und eine oder mehrere zweite Regionen, die von der einen oder den mehreren ersten Regionen verschieden sind, umfassen, wobei die eine oder die mehreren ersten Regionen einen ersten Teilsatz des Arrays von Bildelementen definieren und wobei die eine oder die mehreren zweiten Regionen einen zweiten Teilsatz des Arrays von Bildelementen definieren, wobei der erste und der zweite Teilsatz des Arrays von Bildelementen derart, dass in einem ersten Betrachtungswinkel der erste Teilsatz des Arrays von Bildelementen durch das Array von Abtastelementen angezeigt wird, und derart, dass in einem zweiten Betrachtungswinkel, der vom ersten Betrachtungswinkel verschieden ist, der zweite Teilsatz des Arrays von Bildelementen durch das Array von Abtastelementen angezeigt wird, angeordnet sind.

7. Verfahren nach einem der vorstehenden Ansprüche, wobei das Bestrahlen einer oder mehrerer Regionen des Arrays von plasmonischen Nanostrukturen umfasst: Bestrahlen einer oder mehrerer erster Regionen des Arrays von plasmonischen Nanostrukturen durch das erste Array von Abtastelementen mit elektromagnetischer Strahlung gemäß einem ersten Satz von Bestrahlungsparametern, um die Geometrie der plasmonischen Nanostrukturen in der einen oder den mehreren ersten Regionen zu modifizieren und dadurch die optische Reaktion des Arrays von plasmonischen Nanostrukturen in der einen oder den mehreren ersten Regionen zu modifizieren; und, vorzugsweise gleichzeitig mit dem Bestrahlen der einen oder der mehreren ersten Regionen, Bestrahlen einer oder mehrerer zweiter Regionen des Arrays von plasmonischen Nanostrukturen durch das erste Array von Abtastelementen mit elektromagnetischer Strahlung gemäß einem zweiten Satz von Bestrahlungsparametern, der vom ersten Satz von Bestrahlungsparametern verschieden ist, um die Geometrie der plasmonischen Nanostrukturen in der einen oder den mehreren zweiten Regionen zu modifizieren und dadurch die optische Reaktion des Arrays von plasmonischen Nanostrukturen in der einen oder den mehreren zweiten Regionen zu modifizieren, sodass die modifizierte optische Reaktion der einen oder der mehreren zweiten Regionen von der modifizierten optischen Reaktion der einen oder der mehreren ersten Regionen verschieden ist, wobei die Bestrahlungsparameter vorzugsweise eine Wellenlänge der elektromagnetischen Strahlung, eine Bestrahlungsdauer, eine Abtastgeschwindigkeit der elektromagnetischen Strahlung und/oder eine Intensität der elektromagnetischen Strahlung einschließen und/oder wobei vorzugsweise der Schritt des Bestrahlens einer oder mehrerer erster Regionen des Arrays von plasmonischen Nanostrukturen zum Modifizieren der Geometrie der plasmonischen Nanostrukturen ausgelegt ist, sodass die plasmonischen Nanostrukturen in der einen oder ersten mehreren Regionen eine erste sichtbare Farbe in reflektiertem Licht zeigen, und wobei der Schritt des Bestrahlens einer oder mehrerer zweiter Regionen des Arrays von plasmonischen Nanostrukturen zum Modifizieren der Geometrie der plasmonischen Nanostrukturen ausgelegt ist, sodass die plasmonischen Nanostrukturen in der einen oder den zweiten mehreren Regionen eine zweite sichtbare Farbe in reflektiertem Licht, die von der ersten sichtbaren Farbe verschieden ist, zeigen.

8. Verfahren nach einem der vorstehenden Ansprüche, wobei die eine oder die mehreren Regionen ein Array von Mikrobildern definieren und wobei der optisch variable Effekt, den das Array von Abtastelementen und das Array von Bildelementen in Kombination in Abhängigkeit vom Betrachtungswinkel zeigen, eine synthetisch vergrößerte Version des Arrays von Mikrobildern umfasst.

9. Verfahren nach einem der vorstehenden Ansprüche, wobei das Array von plasmonischen Nanostrukturen ein zweidimensionales Array von Metallnanoplättchen, die auf einer dielektrischen Schicht angeordnet sind, umfasst, wobei vorzugsweise das Array von plasmonischen Nanostrukturen ein zweidimensionales Array von Nanosäulen umfasst, wobei jede Nanosäule einen Körper umfasst, der aus einem dielektrischen Material gebildet ist, und auf jeder Nanosäule ein Metallnanoplättchen angebracht ist.

10. Verfahren nach einem der vorstehenden Ansprüche, wobei entweder: Bereitstellen des ersten Arrays von Abtastelementen über dem Substrat Anbringen des ersten Arrays von Abtastelementen über dem Substrat umfasst, sodass das erste Array von Abtastelementen als das Array von Abtastelementen fungiert und das Array von Abtastelementen und das Array von Bildelementen in Kombination in Abhängigkeit vom Betrachtungswinkel den optisch variablen Effekt zeigen; oder weiter umfassend Entfernen des ersten Arrays von Abtastelementen von über dem Substrat und Anbringen eines zweiten Arrays von Abtastelementen über dem Substrat, sodass das zweite Array von Abtastelementen als das Array von Abtastelementen fungiert und das Array von Abtastelementen und das Array von Bildelementen in Kombination in Abhängigkeit vom Betrachtungswinkel den optisch variablen Effekt zeigen, wobei vorzugsweise der Abstand und/oder die Ausrichtung des ersten Arrays von Abtastelementen von dem des zweiten Arrays von Abtastelementen verschieden ist, sodass der optisch variable Effekt, den das zweite Array von Abtastelementen und das Array von Bildelementen in Kombination zeigen, mindestens teilweise auf dem Moiré-Effekt beruht.

11. Verfahren nach einem der vorstehenden Ansprüche, wobei Bestrahlen einer oder mehrerer Regionen des Arrays von plasmonischen Nanostrukturen durch das erste Array von Abtastelementen ein Bestrahlen der Abtastelemente mit diffuser elektromagnetischer Strahlung umfasst, wobei vorzugsweise Bestrahlen der Abtastelemente mit diffuser elektromagnetischer Strahlung Strukturieren einer kollimierten elektromagnetischen Strahlung und Hindurchführen der strukturierten kollimierten elektromagnetischen Strahlung durch einen Diffusor umfasst und/oder Projizieren eines Bilds, das in einer im Wesentlichen kollimierten elektromagnetischen Strahlung durch einen Diffusor gebildet wird, umfasst.

12. Verfahren nach einem der Ansprüche 1 bis 11, wobei Bestrahlen der einen oder der mehreren Regionen des Arrays von plasmonischen Nanostrukturen durch das erste Array von Abtastelementen Bestrahlen der Abtastelemente mit einer im Wesentlichen kollimierten elektromagnetischen Strahlung umfasst, wobei vorzugsweise Bestrahlen einer oder mehrerer Regionen des Arrays von plasmonischen mit elektromagnetischer Strahlung Projizieren eines Bilds durch das erste Array von Abtastelementen umfasst, um die eine oder die mehreren Regionen gemäß dem projizierten Bild zu bestrahlen, und wobei das projizierte Bild in einer im Wesentlichen kollimierten elektromagnetischen Strahlung gebildet wird, wobei weiter vorzugsweise die eine oder die mehreren Regionen eine oder mehrere erste Regionen und eine oder mehrere zweite Regionen, die von der einen oder den mehreren ersten Regionen verschieden sind, umfassen und wobei das Bestrahlen der einen oder der mehreren Regionen des Arrays von plasmonischen Nanostrukturen durch das erste Array von Abtastelementen ein Bestrahlen der einen oder der mehreren ersten Regionen durch Abtastelemente durch Bestrahlen der Abtastelemente mit einer im Wesentlichen kollimierten elektromagnetischen Strahlung, Bewegen des Substrats bezogen auf das erste Array von Abtastelementen und dann Bestrahlen der einen oder der mehreren zweiten Regionen durch Abtastelemente durch Bestrahlen der Abtastelemente mit einer im Wesentlichen kollimierten elektromagnetischen Strahlung umfasst und wobei weiter vorzugsweise Bestrahlen der einen oder der mehreren ersten Regionen Projizieren eines ersten Bilds, das in einer im Wesentlichen kollimierten elektromagnetischen Strahlung durch das erste Array von Abtastelementen gebildet wird, umfasst und wobei Bestrahlen der einen oder der mehreren zweiten Regionen ein Projizieren eines zweiten Bilds, das in einer im Wesentlichen kollimierten elektromagnetischen Strahlung durch das erste Array von Abtastelementen gebildet wird, umfasst, wobei vorzugsweise das erste Bild vom zweiten Bild verschieden ist.

13. Verfahren nach einem der vorstehenden Ansprüche, wobei das erste und/oder das zweite Array von Abtastelementen ein Array von Fokussierungselementen umfasst, wobei vorzugsweise das Array von Fokussierungselementen Fokussierungselemente, die angepasst sind, um Licht in einer Dimension zu fokussieren, vorzugsweise zylindrische Fokussierungselemente, oder angepasst sind, um Licht in mindestens zwei orthogonalen Richtungen zu fokussieren, vorzugsweise sphärische oder asphärische Fokussierungselemente, umfasst, wobei vorzugsweise das Array von Fokussierungselementen ein Array von Linsen umfasst.

14. Verfahren zum Bilden einer Vielzahl von Sicherheitsvorrichtungen, die jeweils gemäß dem Verfahren nach einem der Ansprüche 1 bis 13 gebildet werden, wobei der Schritt des Bestrahlens einer oder mehrerer Regionen, wenn Bilden einer ersten Sicherheitsvorrichtung durchgeführt wird, vom Schritt des Bestrahlens einer oder mehrerer Regionen beim Bilden einer zweiten Sicherheitsvorrichtung verschieden ist, sodass der optisch variable Effekt, den die erste Sicherheitsvorrichtung zeigt, vom optisch variablen Effekt, den die zweite Sicherheitsvorrichtung zeigt, verschieden ist, wobei vorzugsweise das Verfahren zum Bilden jeder Sicherheitsvorrichtung einen Schritt des Abrufens von Daten, die der gebildeten Sicherheitsvorrichtung zugeordnet sind, umfasst, und weiter Bestrahlen einer oder mehrerer Regionen gemäß den abgerufenen Daten umfasst und/oder wobei vorzugsweise entweder die eine oder die mehreren Regionen der ersten Sicherheitsvorrichtung von der einen oder den mehreren Regionen der zweiten Sicherheitsvorrichtung verschieden sind, oder Bestrahlungsparameter, die beim Bestrahlen der einen oder der mehreren Regionen der ersten Sicherheitsvorrichtung verwendet werden, von Bestrahlungsparametern, die beim Bestrahlen der einen oder der mehreren Regionen der zweiten Sicherheitsvorrichtung verwendet werden, verschieden sind, sodass die optische Reaktion der einen oder der mehreren Regionen der ersten Sicherheitsvorrichtung von der optischen Reaktion der einen oder der mehreren Regionen der zweiten Sicherheitsvorrichtung verschieden ist.

15. Verfahren zum Bilden einer Sicherheitsvorrichtung, das Verfahren umfassend:

Bereitstellen eines Substrats, umfassend ein Array von plasmonischen Nanostrukturen;
Bereitstellen eines Arrays von Fokussierungselementen über dem Substrat;
Bestrahlen einer Vielzahl von Regionen des Arrays von plasmonischen Nanostrukturen durch das erste Array von Fokussierungselementen mit elektromagnetischer Strahlung zum Modifizieren der Geometrie der plasmonischen Nanostrukturen in der Vielzahl von Regionen und dadurch Modifizieren der optischen Reaktion des Arrays von plasmonischen Nanostrukturen in der Vielzahl von Regionen und
Entfernen des ersten Arrays von Fokussierungselementen von über dem Substrat.

16. Verfahren nach Anspruch 15, wobei Bestrahlen durch das Array von Fokussierungselementen Bestrahlen des Arrays von Fokussierungselementen mit einer im Wesentlichen kollimierten elektromagnetischen Strahlung umfasst, wobei vorzugsweise Bestrahlen der Vielzahl von Regionen des Arrays von plasmonischen Nanostrukturen durch das Array von Fokussierungselementen Projizieren eines Bilds, das in einem im Wesentlichen kollimierten elektromagnetischen Licht durch das Array von Fokussierungselementen gebildet wird, umfasst, um die Vielzahl von Regionen gemäß dem projizierten Bild zu bestrahlen.

17. Verfahren nach einem der Ansprüche 15 bis 16, wobei die Vielzahl von Regionen eine erste Vielzahl von Regionen und eine zweite Vielzahl von Regionen, die von der ersten Vielzahl von Regionen verschieden ist, umfasst, wobei Bestrahlen der Vielzahl von Regionen des Arrays von plasmonischen Nanostrukturen durch das Array von Fokussierungselementen ein Bestrahlen der ersten Vielzahl von Regionen, vorzugsweise gleichzeitig, durch das Array von Fokussierungselementen mit elektromagnetischer Strahlung zum Modifizieren der Geometrie der plasmonischen Nanostrukturen in der ersten Vielzahl von Regionen und dann ein nachfolgendes Bestrahlen der zweiten Vielzahl von Regionen, vorzugsweise gleichzeitig, durch das Array von Fokussierungselementen mit elektromagnetischer Strahlung zum Modifizieren der Geometrie der plasmonischen Nanostrukturen in der zweiten Vielzahl von Regionen umfasst, vorzugsweise umfassend Bewegen des Substrats bezogen auf das erste Array von Fokussierungselementen nach dem Bestrahlen der ersten Vielzahl von Regionen und vor dem Bestrahlen der zweiten Vielzahl von Regionen, sodass die erste Vielzahl von Regionen seitlich von der zweiten Vielzahl von Regionen versetzt ist, und bevorzugt, sodass die erste Vielzahl von Regionen von der zweiten Vielzahl von Regionen beabstandet ist, und/oder wobei vorzugsweise Bestrahlen der ersten Vielzahl von Regionen Projizieren eines Bilds, das in einem im Wesentlichen kollimierten elektromagnetischen Licht durch das Array von Fokussierungselementen gebildet wird, umfasst, und wobei Bestrahlen der zweiten Vielzahl von Regionen Projizieren des gleichen Bilds, das in einem im Wesentlichen kollimierten elektromagnetischen Licht durch das Array von Fokussierungselementen gebildet wird, umfasst.

18. Verfahren nach einem der Ansprüche 15 bis 17, wobei Bestrahlen der Vielzahl von Regionen des Arrays von plasmonischen Nanostrukturen umfasst: Bestrahlen einer oder mehrerer erster Regionen des Arrays von plasmonischen Nanostrukturen durch das erste Array von Fokussierungselementen mit elektromagnetischer Strahlung gemäß einem ersten Satz von Bestrahlungsparametern, um die Geometrie der plasmonischen Nanostrukturen in der einen oder den mehreren ersten Regionen zu modifizieren und dadurch die optische Reaktion des Arrays von plasmonischen Nanostrukturen in der einen oder den mehreren ersten Regionen zu modifizieren; und, vorzugsweise im Wesentlichen gleichzeitig mit dem Schritt des Bestrahlens der einen oder der mehreren ersten Regionen mit elektromagnetischer Strahlung, Bestrahlen einer oder mehrerer zweiter Regionen des Arrays von plasmonischen Nanostrukturen durch das erste Array von Fokussierungselementen mit elektromagnetischer Strahlung gemäß einem zweiten Satz von Bestrahlungsparametern, der vom ersten Satz von Bestrahlungsparametern verschieden ist, um die Geometrie der plasmonischen Nanostrukturen in der einen oder den mehreren zweiten Regionen zu modifizieren und dadurch die optische Reaktion des Arrays von plasmonischen Nanostrukturen in der einen oder den mehreren zweiten Regionen zu modifizieren, sodass die modifizierte optische Reaktion der einen oder der mehreren zweiten Regionen von der modifizierten optischen Reaktion der einen oder der mehreren ersten Regionen verschieden ist, wobei die Bestrahlungsparameter vorzugsweise eine Wellenlänge der elektromagnetischen Strahlung, eine Bestrahlungsdauer, eine Abtastgeschwindigkeit der elektromagnetischen Strahlung und/oder eine Intensität der elektromagnetischen Strahlung einschließen und/oder wobei vorzugsweise der Schritt des Bestrahlens der einen oder der mehreren ersten Regionen des Arrays von plasmonischen Nanostrukturen zum Modifizieren der Geometrie der plasmonischen Nanostrukturen ausgelegt ist, sodass die plasmonischen Nanostrukturen in der einen oder ersten mehreren Regionen eine erste sichtbare Farbe in reflektiertem Licht zeigen, und wobei der Schritt des Bestrahlens einer oder mehrerer zweiter Regionen des Arrays von plasmonischen Nanostrukturen zum Modifizieren der Geometrie der plasmonischen Nanostrukturen ausgelegt ist, sodass die plasmonischen Nanostrukturen in der einen oder den zweiten mehreren Regionen eine zweite sichtbare Farbe in reflektiertem Licht, die von der ersten sichtbaren Farbe verschieden ist, zeigen.

19. Sicherheitsvorrichtung, die gemäß dem Verfahren nach einem der Ansprüche 1 bis 13 oder gemäß dem Verfahren nach einem der Ansprüche 15 bis 18 gebildet wird.

## Revendications

1. Procédé de formation d'un dispositif de sécurité, le procédé comprenant :

    une fourniture d'un substrat comprenant un réseau de nanostructures plasmoniques ;
    une fourniture d'un premier réseau d'éléments d'échantillonnage sur le substrat ; et
    une exposition d'une ou plusieurs régions du réseau de nanostructures plasmoniques à travers le premier réseau d'éléments d'échantillonnage à un rayonnement électromagnétique de façon à modifier la géométrie des nanostructures plasmoniques dans les une ou plusieurs régions et modifier ainsi la réponse optique du réseau de nanostructures plasmoniques dans les une ou plusieurs régions ;

dans lequel lesdites une ou plusieurs régions définissent un réseau d'éléments d'image configuré pour une visualisation à travers un réseau d'éléments d'échantillonnage de telle sorte qu'un effet optiquement variable soit présenté par le réseau d'éléments d'échantillonnage et le réseau d'éléments d'image en association en fonction de l'angle de visualisation.

2. Procédé selon la revendication 1, dans lequel l'étape consistant à exposer une ou plusieurs régions du réseau de nanostructures plasmoniques est configurée pour modifier la géométrie des nanostructures plasmoniques de telle sorte que les nanostructures plasmoniques dans les une ou plusieurs régions présentent une ou plusieurs couleurs visibles dans une lumière réfléchie.

3. Procédé selon la revendication 1 ou la revendication 2, dans lequel le réseau de nanostructures plasmoniques fourni présente une ou plusieurs couleurs visibles dans une lumière réfléchie, et dans lequel une modification de la géométrie des nanostructures plasmoniques dans les une ou plusieurs régions modifie la couleur présentée par les nanostructures plasmoniques dans une lumière réfléchie, de telle sorte que les nanostructures plasmoniques dans les une ou plusieurs régions présentent une ou plusieurs couleurs visibles différentes des une ou plusieurs couleurs visibles présentées par le réseau de nanostructures plasmoniques fourni, dans lequel de préférence soit le réseau de nanostructures plasmoniques fourni présente une couleur sensiblement uniforme dans une lumière réfléchie à travers le réseau, de préférence une couleur bleue ou blanche sensiblement uniforme.

4. Procédé selon l'une quelconque des revendications précédentes, dans lequel une exposition d'une ou plusieurs régions du réseau de plasmoniques à un rayonnement électromagnétique comprend une exposition des une ou plusieurs régions à un rayonnement électromagnétique provenant d'un laser et/ou comprend une fusion photothermique au moins partielle des nanostructures plasmoniques dans les une ou plusieurs régions de façon à modifier leur géométrie.

5. Procédé selon l'une quelconque des revendications précédentes, dans lequel une exposition d'une ou plusieurs régions du réseau de plasmoniques à un rayonnement électromagnétique comprend un balayage du rayonnement électromagnétique à travers les une ou plusieurs régions et/ou comprend une projection d'une image à travers le premier réseau d'éléments d'échantillonnage de façon à exposer les une ou plusieurs régions conformément à l'image projetée.

6. Procédé selon l'une quelconque des revendications précédentes, dans lequel les une ou plusieurs régions comprennent une ou plusieurs premières régions et une ou plusieurs secondes régions différentes des une ou plusieurs premières régions, dans lequel les une ou plusieurs premières régions définissent un premier sous-ensemble du réseau d'éléments d'image et dans lequel les une ou plusieurs secondes régions définissent un second sous-ensemble du réseau d'éléments d'image, dans lequel les premier et second sous-ensembles du réseau d'éléments d'image sont configurés de telle sorte qu'à un premier angle de visualisation le premier sous-ensemble du réseau d'éléments d'image soit affiché par le réseau d'éléments d'échantillonnage et de telle sorte qu'à un second angle de visualisation, différent du premier angle de visualisation, le second sous-ensemble du réseau d'éléments d'image soit affiché par le réseau d'éléments d'échantillonnage.

7. Procédé selon l'une quelconque des revendications précédentes, dans lequel une exposition d'une ou plusieurs régions du réseau de nanostructures plasmoniques comprend : une exposition d'une ou plusieurs premières régions du réseau de nanostructures plasmoniques à travers le premier réseau d'éléments d'échantillonnage à un rayonnement électromagnétique conformément à un premier ensemble de paramètres d'exposition de façon à modifier la géométrie des nanostructures plasmoniques dans les une ou plusieurs premières régions et modifier ainsi la réponse optique du réseau de nanostructures plasmoniques dans les une ou plusieurs premières régions ; et, de préférence en même temps qu'une exposition des une ou plusieurs premières régions, une exposition d'une ou plusieurs secondes régions du réseau de nanostructures plasmoniques à travers le premier réseau d'éléments d'échantillonnage à un rayonnement électromagnétique conformément à un second ensemble de paramètres d'exposition différent du premier ensemble de paramètres d'exposition de façon à modifier la géométrie des nanostructures plasmoniques dans les une ou plusieurs secondes régions et modifier ainsi la réponse optique du réseau de nanostructures plasmoniques dans les une ou plusieurs secondes régions, de telle sorte que la réponse optique modifiée des une ou plusieurs secondes régions soit différente de la réponse optique modifiée des une ou plusieurs premières régions, dans lequel de préférence les paramètres d'exposition incluent une longueur d'onde du rayonnement électromagnétique, une durée d'exposition, une vitesse de balayage du rayonnement électromagnétique, et/ou une intensité du rayonnement électromagnétique, et/ou dans lequel de préférence l'étape consistant à exposer une ou plusieurs premières régions du réseau de nanostructures plasmoniques est configurée pour modifier la géométrie des nanostructures plasmoniques de telle sorte que les nanostructures plasmoniques dans les une ou plusieurs premières régions présentent une première couleur visible dans une lumière réfléchie, et dans lequel l'étape consistant à exposer une ou plusieurs secondes régions du réseau de nanostructures plasmoniques est configurée pour modifier la géométrie des nanostructures plasmoniques de telle sorte que les nanostructures plasmoniques dans les une ou secondes plusieurs régions présentent une seconde couleur visible dans une lumière réfléchie, différente de la première couleur visible.

8. Procédé selon l'une quelconque des revendications précédentes, dans lequel lesdites une ou plusieurs régions définissent un réseau de micro-images, et dans lequel l'effet optiquement variable présenté par le réseau d'éléments d'échantillonnage et le réseau d'éléments d'image en association en fonction de l'angle de visualisation comprend une version agrandie de manière synthétique du réseau de micro-images.

9. Procédé selon l'une quelconque des revendications précédentes, dans lequel le réseau de nanostructures plasmoniques comprend un réseau bidimensionnel de nanoplaques métalliques disposé sur une couche diélectrique, dans lequel de préférence le réseau de nanostructures plasmoniques comprend un réseau bidimensionnel de nanopiliers, chaque nanopilier comprenant un corps constitué d'un matériau diélectrique et chaque nanopilier étant surmonté d'une nanoplaque métallique.

10. Procédé selon l'une quelconque des revendications précédentes, dans lequel soit : une fourniture du premier réseau d'éléments d'échantillonnage sur le substrat comprend une application du premier réseau d'éléments d'échantillonnage sur le substrat de telle sorte que le premier réseau d'éléments d'échantillonnage agisse comme ledit réseau d'éléments d'échantillonnage et l'effet optiquement variable soit présenté par le premier réseau d'éléments d'échantillonnage et le réseau d'éléments d'image en association en fonction de l'angle de visualisation ; soit comprenant en outre un retrait du premier réseau d'éléments d'échantillonnage du substrat et une application d'un second réseau d'éléments d'échantillonnage sur le substrat de telle sorte que le second réseau d'éléments d'échantillonnage agisse comme ledit réseau d'éléments d'échantillonnage et l'effet optiquement variable soit présenté par le second réseau d'éléments d'échantillonnage et le réseau d'éléments d'image en association en fonction de l'angle de visualisation, dans lequel de préférence le pas et/ou l'orientation du premier réseau d'éléments d'échantillonnage diffèrent de ceux du second réseau d'éléments d'échantillonnage de telle sorte que l'effet optiquement variable présenté par le second réseau d'éléments d'échantillonnage et le réseau d'éléments d'image en association soit au moins en partie dû à l'effet de moiré.

11. Procédé selon l'une quelconque des revendications précédentes, dans lequel une exposition d'une ou plusieurs régions du réseau de nanostructures plasmoniques à travers le premier réseau d'éléments d'échantillonnage comprend une exposition des éléments d'échantillonnage à un rayonnement électromagnétique diffus, dans lequel de préférence une exposition des éléments d'échantillonnage à un rayonnement électromagnétique diffus comprend une mise en forme d'un rayonnement électromagnétique collimaté et un passage du rayonnement électromagnétique collimaté mis en forme à travers un diffuseur et/ou comprend une projection d'une image formée dans un rayonnement électromagnétique sensiblement collimaté à travers un diffuseur.

12. Procédé selon l'une quelconque des revendications 1 à 11, dans lequel une exposition des une ou plusieurs régions du réseau de nanostructures plasmoniques à travers le premier réseau d'éléments d'échantillonnage comprend une exposition des éléments d'échantillonnage à un rayonnement électromagnétique sensiblement collimaté, dans lequel de préférence une exposition d'une ou plusieurs régions du réseau de plasmoniques à un rayonnement électromagnétique comprend une projection d'une image à travers le premier réseau d'éléments d'échantillonnage de façon à exposer les une ou plusieurs régions conformément à l'image projetée et dans lequel l'image projetée est formée dans un rayonnement électromagnétique sensiblement collimaté, dans lequel de manière encore plus préférée les une ou plusieurs régions comprennent une ou plusieurs premières régions et une ou plusieurs secondes régions différentes des une ou plusieurs premières régions, et dans lequel une exposition des une ou plusieurs régions du réseau de nanostructures plasmoniques à travers le premier réseau d'éléments d'échantillonnage comprend une exposition des une ou plusieurs premières régions à travers des éléments d'échantillonnage en exposant les éléments d'échantillonnage à un rayonnement électromagnétique sensiblement collimaté, un déplacement du substrat par rapport au premier réseau d'éléments d'échantillonnage, puis une exposition des une ou plusieurs secondes régions à travers des éléments d'échantillonnage en exposant les éléments d'échantillonnage à un rayonnement électromagnétique sensiblement collimaté, et dans lequel de manière encore plus préférée une exposition des une ou plusieurs premières régions comprend une projection d'une première image formée dans un rayonnement électromagnétique sensiblement collimaté à travers le premier réseau d'éléments d'échantillonnage et dans lequel une exposition des une ou plusieurs secondes régions comprend une projection d'une seconde image formée dans un rayonnement électromagnétique sensiblement collimaté à travers le premier réseau d'éléments d'échantillonnage, dans lequel de préférence la première image est différente de la seconde image.

13. Procédé selon l'une quelconque des revendications précédentes, dans lequel le premier et/ou le second réseau d'éléments d'échantillonnage comprend un réseau d'éléments de concentration, dans lequel de préférence le réseau d'éléments de concentration comprend des éléments de concentration adaptés pour concentrer une lumière dans une dimension, de préférence des éléments de concentration cylindriques, ou adaptés pour concentrer une lumière dans au moins deux directions orthogonales, de préférence des éléments de concentration sphériques ou asphériques, dans lequel de préférence le réseau d'éléments de concentration comprend un réseau de lentilles.

14. Procédé de formation d'une pluralité de dispositifs de sécurité, chacun formé selon le procédé de l'une quelconque des revendications 1 à 13, dans lequel l'étape consistant à exposer une ou plusieurs régions lors d'une formation d'un premier dispositif de sécurité est réalisée différemment de l'étape consistant à exposer une ou plusieurs régions lors d'une formation d'un second dispositif de sécurité de telle sorte que l'effet optiquement variable présenté par le premier dispositif de sécurité soit différent de l'effet optiquement variable présenté par le second dispositif de sécurité, dans lequel de préférence le procédé de formation de chaque dispositif de sécurité comprend une étape consistant à récupérer des données associées au dispositif de sécurité qui est formé, et comprend en outre une exposition d'une ou plusieurs régions conformément aux données récupérées, et/ou dans lequel de préférence soit les une ou plusieurs régions du premier dispositif de sécurité diffèrent des une ou plusieurs régions du second dispositif de sécurité, soit des paramètres d'exposition utilisés lors d'une exposition des une ou plusieurs régions du premier dispositif de sécurité diffèrent de paramètres d'exposition utilisés lors d'une exposition des une ou plusieurs régions du second dispositif de sécurité de telle sorte que la réponse optique des une ou plusieurs régions du premier dispositif de sécurité diffère de la réponse optique des une ou plusieurs régions du second dispositif de sécurité.

15. Procédé de formation d'un dispositif de sécurité, le procédé comprenant :

une fourniture d'un substrat comprenant un réseau de nanostructures plasmoniques ;
une fourniture d'un réseau d'éléments de concentration sur le substrat ;
une exposition d'une pluralité de régions du réseau de nanostructures plasmoniques à travers le premier réseau d'éléments de concentration à un rayonnement électromagnétique de façon à modifier la géométrie des nanostructures plasmoniques dans la pluralité de régions et modifier ainsi la réponse optique du réseau de nanostructures plasmoniques dans la pluralité de régions ; et
un retrait du premier réseau d'éléments de concentration du substrat.

16. Procédé selon la revendication 15, dans lequel une exposition à travers le réseau d'éléments de concentration comprend une exposition du réseau d'éléments de concentration à un rayonnement électromagnétique sensiblement collimaté, dans lequel de préférence une exposition de la pluralité de régions du réseau de nanostructures plasmoniques à travers le réseau d'éléments de concentration comprend une projection d'une image formée dans une lumière électromagnétique sensiblement collimatée à travers le réseau d'éléments de concentration de façon à exposer la pluralité de régions conformément à l'image projetée.

17. Procédé selon l'une quelconque des revendications 15 à 16, dans lequel la pluralité de régions comprend une première pluralité de régions et une seconde pluralité de régions différente de la première pluralité de régions, dans lequel une exposition de la pluralité de régions du réseau de nanostructures plasmoniques à travers le réseau d'éléments de concentration comprend une exposition de la première pluralité de régions, de préférence en même temps, à travers le réseau d'éléments de concentration à un rayonnement électromagnétique de façon à modifier la géométrie des nanostructures plasmoniques dans la première pluralité de régions, puis par la suite une exposition de la seconde pluralité de régions, de préférence en même temps, à travers le réseau d'éléments de concentration à un rayonnement électromagnétique de façon à modifier la géométrie des nanostructures plasmoniques dans la seconde pluralité de régions, comprenant de préférence un déplacement du substrat par rapport au premier réseau d'éléments de concentration après une exposition de la première pluralité de régions et avant une exposition de la seconde pluralité de régions, de telle sorte que la première pluralité de régions soient décalées latéralement de la seconde pluralité de régions et préférable de telle sorte que la première pluralité de régions soient espacées de la seconde pluralité de régions, et/ou dans lequel de préférence une exposition de la première pluralité de régions comprend une projection d'une image formée dans une lumière électromagnétique sensiblement collimatée à travers le réseau d'éléments de concentration et dans lequel une exposition de la seconde pluralité de régions comprend une projection de la même image formée dans une lumière électromagnétique sensiblement collimatée à travers le réseau d'éléments de concentration.

18. Procédé selon l'une quelconque des revendications 15 à 17, dans lequel une exposition de la pluralité de régions du réseau de nanostructures plasmoniques comprend : une exposition d'une ou plusieurs premières régions du réseau de nanostructures plasmoniques à travers le premier réseau d'éléments de concentration à un rayonnement électromagnétique conformément à un premier ensemble de paramètres d'exposition de façon à modifier la géométrie des nanostructures plasmoniques dans les une ou plusieurs premières régions et modifier ainsi la réponse optique du réseau de nanostructures plasmoniques dans les une ou plusieurs premières régions ; et, de préférence sensiblement en même temps que l'étape consistant à exposer les une ou plusieurs premières régions à un rayonnement électromagnétique, une exposition d'une ou plusieurs secondes régions du réseau de nanostructures plasmoniques à travers le premier réseau d'éléments de concentration à un rayonnement électromagnétique conformément à un second ensemble de paramètres d'exposition différent du premier ensemble de paramètres d'exposition de façon à modifier la géométrie des nanostructures plasmoniques dans les une ou plusieurs secondes régions et modifier ainsi la réponse optique du réseau de nanostructures plasmoniques dans les une ou plusieurs secondes régions, de telle sorte que la réponse optique modifiée des une ou plusieurs secondes régions soit différente de la réponse optique modifiée des une ou plusieurs premières régions, dans lequel de préférence les paramètres d'exposition incluent une longueur d'onde du rayonnement électromagnétique, une durée d'exposition, une vitesse de balayage du rayonnement électromagnétique, et/ou une intensité du rayonnement électromagnétique, et/ou dans lequel de préférence l'étape consistant à exposer les une ou plusieurs premières régions du réseau de nanostructures plasmoniques est configurée pour modifier la géométrie des nanostructures plasmoniques de telle sorte que les nanostructures plasmoniques dans les une ou plusieurs premières régions présentent une première couleur visible dans une lumière réfléchie, et dans lequel l'étape consistant à exposer une ou plusieurs secondes régions du réseau de nanostructures plasmoniques est configurée pour modifier la géométrie des nanostructures plasmoniques de telle sorte que les nanostructures plasmoniques dans les une ou plusieurs secondes régions présentent une seconde couleur visible dans une lumière réfléchie, différente de la première couleur visible.

19. Dispositif de sécurité formé selon le procédé de l'une quelconque des revendications 1 à 13 ou selon le procédé de l'une quelconque des revendications 15 à 18.

Provide a substrate comprising
an array of plasmonic
nanostructures

S100

Provide an array of sampling
elements over the substrate

S200

Irradiate one or more regions of
the array of plasmonic
nanostructures through the array
of sampling elements with
electromagnetic radiation so as
to modify the optical response of
the plasmonic nanostructures in
the one or more regions

S300

Fig. 1

Fig. 2

Fig. 3

Fig. 4A

Fig. 4B

Fig. 4C

Fig. 5A

Fig. 5B

Fig. 5C

Fig 6

Fig 7

EP 4 051 508 B1

Fig. 2

Fig. 1

38

Fig. 10

Fig. 11

Fig. 3

Figure 14A

Figure 14B

Figure 15A

Figure 15B

Figure 16A

Figure 16B

Figure 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1695121 A
- WO 9427254 A
- WO 2011107782 A
- WO 2011107783 A
- US 4892336 A
- WO 2011051669 A
- WO 2011051670 A
- WO 2012027779 A
- US 6856462 B
- WO 2015011493 A
- WO 2015011494 A
- WO 2019077419 A1
- WO 2016198657 A
- EP 0059056 A
- EP 0860298 A
- WO 03095188 A
- WO 8300659 A
- WO 0039391 A
- WO 03054297 A
- WO 200039391 A


**Non-patent literature cited in the description**

- **SHAWN J. TAN et al.** Plasmonic Color Palettes for Photorealistic Printing with Aluminum Nanostructures. *Nano Letters,* 2014, vol. 14 (7), 4023-4029
- **YINGHONG GU et al.** Color generation via subwavelength plasmonic nanostructures. *Nanoscale,* 2015, vol. 7, 6409-6419
- **ANDERS KRISTENSEN et al.** Plasmonic colour generation. *Nat. Rev. Mater.,* 2016, vol. 2 (16088), 1-14